(19)

**Europäisches Patentamt**
**European Patent Office**
**Office européen des brevets**

(11) **EP 4 372 336 B1**

(12) **EUROPEAN PATENT SPECIFICATION**

(45) Date of publication and mention
of the grant of the patent:
**30.04.2025 Bulletin 2025/18**

(21) Application number: **23210588.2**

(22) Date of filing: **17.11.2023**

(51) International Patent Classification (IPC):
*G01J 5/061* (2022.01)   *G01J 5/06* (2022.01)
*G01J 5/12* (2006.01)   *G01K 13/20* (2021.01)
*G01K 7/01* (2006.01)   *G01K 3/08* (2006.01)
*G01J 5/00* (2022.01)   *G01J 5/14* (2006.01)

(52) Cooperative Patent Classification (CPC):
**G01K 13/223; G01J 5/0011; G01J 5/061;**
**G01J 5/064; G01J 5/12; G01K 3/08; G01K 7/01;**
G01J 5/14; G01J 5/80; G01J 2005/063

(54) **MEASUREMENT SYSTEM AND METHODS THEREOF**

MESSSYSTEM UND VERFAHREN DAFÜR

SYSTÈME DE MESURE ET PROCÉDÉS ASSOCIÉS

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **18.11.2022 US 202263426382 P**

(43) Date of publication of application:
**22.05.2024 Bulletin 2024/21**

(73) Proprietor: **Joy Express Investment Limited**
**Apia (WS)**

(72) Inventors:
• **YU, TSAI-CHUNG**
**110057 Taipei City (TW)**
• **LEE, NAN-HUEI**
**110057 Taipei City (TW)**

(74) Representative: **Charrier Rapp & Liebau**
**Patentanwälte PartG mbB**
**Fuggerstraße 20**
**86150 Augsburg (DE)**

(56) References cited:
**DE-A1- 10 341 142    US-A1- 2009 207 882**
**US-A1- 2021 364 359    US-B2- 6 890 097**
**US-B2- 8 061 894**

• **ANONYMOUS: "THERMOPILE SENSOR FOR**
**CONTACTLESS TEMPERATURE", TE**
**CONNECTIVITY CORPORATE WEBSITE, 30**
**January 2021 (2021-01-30), Schaffhausen,**
**Switzerland, pages 1 - 21, XP093145717,**
**Retrieved from the Internet <URL:https://www.te.**
**com/content/dam/te-com/documents/sensors/**
**global/**
**analog-digital-thermopile-application-note.pdf>**
**[retrieved on 20240326]**

**Description**

**BACKGROUND OF THE INVENTION**

**FIELD OF THE INVENTION**

The present disclosure relates to chips, systems and methods for use in temperature sensing and temperature measurement, and more particularly to a sensing chip using a device made with a semiconductor manufacturing process to sense a target temperature, a measuring chip operating in conjunction with the sensing chip, a temperature difference measurement system for measuring the sensing chip and the measuring chip, a temperature measurement system and method using the temperature difference measurement system, and a computer program product thereof.

**DESCRIPTION OF THE PRIOR ART**

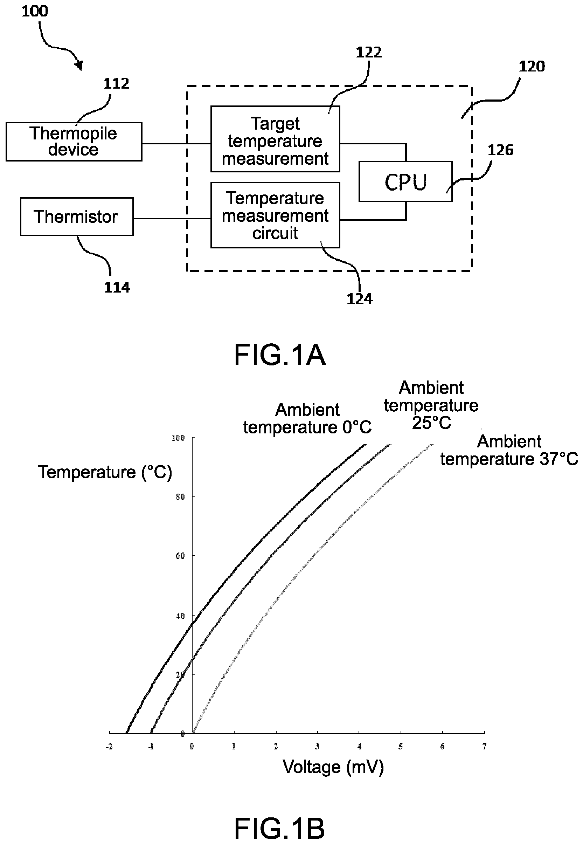

Referring to FIG. 1A, there is shown a block diagram of a conventional temperature measurement system using a thermopile device and a thermistor. The conventional temperature measurement system 100 comprises a driving chip 120, a thermopile device 112 and a thermistor 114, wherein the thermopile device 112 senses a target temperature, the thermistor 114 directly senses the ambient temperature of the thermopile device 112. The driving chip 120 comprises a target temperature measurement circuit 122, a temperature measurement circuit 124 and a central processing unit (CPU) 126, wherein the target temperature measurement circuit 122 is electrically connected to the thermopile device 112 to measure a first voltage signal associated with the target temperature. The temperature measurement circuit 124 is electrically connected to the thermistor 114 to measure a second voltage signal associated with the ambient temperature. The CPU 126 receives the first and second voltage signals to calculate the target temperature sensed by the thermopile device 112.

The thermopile device 112 is a silicon transducer. The silicon transducer is manufactured by a silicon process and a semiconductor manufacturing process. With the silicon transducer being manufactured by a semiconductor manufacturing process, the manifestation of its characteristics and physical quantity must be affected by temperature. Referring to FIG. 1B, there is shown a graph of a voltage signal of the thermopile device 112 versus a target temperature, measured with the target temperature measurement circuit 122 at different ambient temperatures 0°C, 25°C and 37°C. An ideal thermopile device equation is as follows: $V_{out} = K \cdot (T_t^4 - T_a^4)$ , where $T_t$ denotes the target temperature, $T_a$ denotes the ambient temperature of the thermopile, and $K$ denotes a calibration constant.

The ideal thermopile equation shows that the output voltage of the thermopile device 112 is directly proportional to the difference between the fourth power of the target temperature $T_t^4$ and the fourth power of the ambient temperature $T_a^4$. Therefore, the output voltage of the thermopile device 112 and the target temperature $T_t$, as measured by the target temperature measurement circuit 122, have a nonlinear relation. In other words, the ideal thermopile equation also shows that a nonlinear relation of the output voltage varies with the ambient temperature $T_a$. The nonlinear relation of the output voltage is even more obvious in the presence of a large difference between the ambient temperature $T_a$ of the silicon transducer and the target temperature $T_t$ to be measured. If the temperature measurement system 100 does not calibrate the output voltage of the silicon transducer, errors of the temperature values will increase. Thus, the CPU 126 has to be informed of the ambient temperature of the thermopile device 112 in order to calibrate the calculated target temperature to ensure accurate temperature measurement.

The thermistor 114 is a temperature sensor commonly used in temperature measurement. However, the thermistor 114 is a self-contained component, whereas the thermopile device 112 is a silicon transducer manufactured by a silicon process and a semiconductor manufacturing process. Due to the different manufacturing processes, the thermistor 114 cannot be integrated with the silicon transducer using semiconductor manufacturing process, but can be placed inside the same package by packaging technology. In addition, the driving chip 120 operates in conjunction with the thermopile device 112 and the thermistor 114, and the target temperature and the measurement results of the thermistor also have a nonlinear relation, and thus these factors requires a calibration by the system to enhance the accuracy of the measurement results. As a result, these factors will result in difficulties in mass production due to the additional calibration procedures.

Other conventional temperature measurement systems are disclosed e.g. in US6565254 B2, US2021/364359 A1, DE10341142 A1, US6890097 B2, US 2009/207882 A1, and US8061894 B2.

In particular, US2021/364359 A1 discloses an infrared temperature sensor comprising a package substrate, a thermopile sensing chip attached to the package substrate, a cap, and a filter. The thermopile sensing chip includes a chip substrate, a thermopile sensing unit, a heater, and at least a temperature sensing element. The heater maintains the cold end of the thermopile sensing unit at a pre-set working temperature thereby enabling single-point temperature calibration.

DE10341142 A1 discloses a body temperature radiation thermometer comprising a cylindrical housing, a thermopile sensor at the tapered end of the housing, a sensor housing, a sensor housing cap, a sensor housing bottom, an infrared thermopile sensor on the sensor housing bottom, a heater on the sensor housing bottom, an electrical connection between the thermopile sensor and a measuring electronics circuit board, a plurality of temperature sensors. The measured values of the temperature sensors are used to calculate temperature differences between them and thereby to determine instantaneous temperature gradients within the sensor housing.

US6890097 B2 discloses a semiconductor device comprising a silicon substrate, a main circuit section, a temperature measuring sensor comprising a p-n junction diode, a temperature calibration circuit, and an additional temperature measuring sensor comprising a p-n junction diode.

US 2009/207882 A1 discloses a first temperature sensor being a thermal diode, a second temperature sensor being a thermopile or a CMOS-infrared temperature sensor, a third temperature sensor, wherein the second temperature sensor and the third temperature sensor are integrated on a substrate to form a single-chip temperature module.

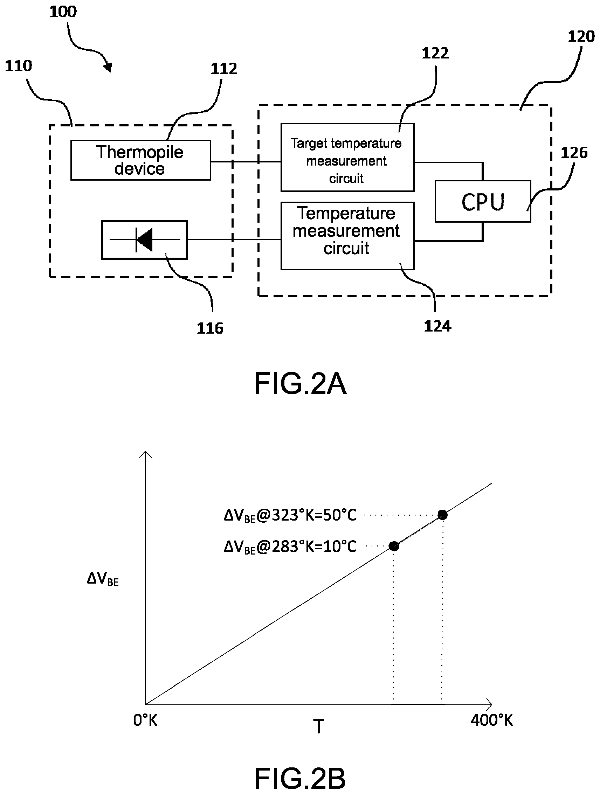

Finally, US8061894 B2 discloses a semiconductor device comprising n pieces of semiconductor chip, wherein each semiconductor chip is mounted with a temperature detection circuit. Each temperature detection circuit has its output terminal commonly connected to out output terminal. In one embodiment, an average value of the temperatures of the individual semiconductor chips is detected. In another embodiment, the highest temperature from among all the semiconductor chips is detected. In another embodiment, the lowest temperature from among all the semiconductor chips is detected. Referring to FIG. 2A, there is shown a block diagram of another conventional temperature measurement system 100 including a sensing chip. The conventional temperature measurement system 100 comprises a driving chip 120 and a sensing chip 110. The driving chip 120 comprises a target temperature measurement circuit 122, a temperature measurement circuit 124 and a CPU 126. The thermopile device 112 and a diode 116 are integrated into the sensing chip 110 by a semiconductor manufacturing process. The diode 116 functions as a heat sensor for directly measuring the ambient temperature of the thermopile device 112. Since the driving chip 120 and the sensing chip 110 are electrically connected, the target temperature measurement circuit 122 of the driving chip 120 is electrically connected to the thermopile device 112, and the temperature measurement circuit 124 of the driving chip 120 is electrically connected to the diode 116.

Although the diode 116 and the silicon transducer can be integrated by a semiconductor manufacturing process, the manifestation of the characteristics and physical quantity of the silicon transducer is still affected by temperature. **If** the temperature measurement system 100 does not calibrate the output voltage of the silicon transducer, the error of the temperature difference measurement would be increased. From the perspective of the driving chip 120, the diode 116 of the sensing chip 110 is an external component, and thus the driving chip 120 cannot calibrate the diode 116 in the course of chip production, and the mass production of integrated products would be difficult because of an extra calibration procedure to enhance the accuracy of the measurement results.

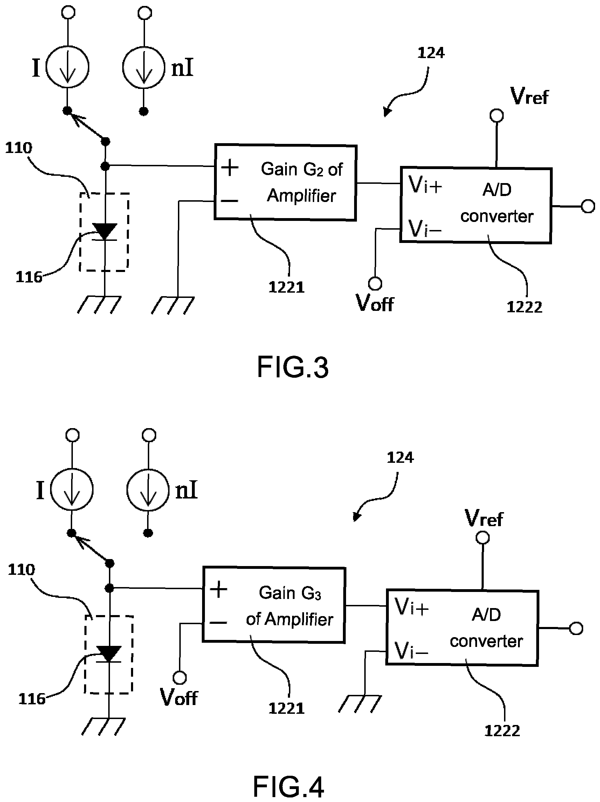

Referring to FIG. 3 and FIG. 4, there are shown circuit diagrams of the external diode 116 measured with two conventional temperature measurement circuits 124 of the driving chip 120 shown in FIG. 2A, respectively. When measuring the external diode 116, the conventional temperature measurement circuits 124 of the driving chip 120 measure absolute temperature starting from 0°K, as shown in FIG. 2B. The room temperature 27°C is around 300°K and ranges between 10°C (283°K) and 50°C (323°K). Accuracy of 0.01°K requires 30000 count stable resolution, corresponding to the A/D converter specification of 16-bit stability to only allow the last bit jitter, which is a very strict specification for A/D converters and also required high signal noise suppression. The driving chip directly measures the external diode; as a result, the temperature is too wide, and the accuracy is low. Furthermore, the external diode 116 of the sensing chip 110 is an arbitrary choice for system manufacturers, and thus manufacturers of the driving chip 120 cannot accurately calibrate the external diode, leading to considerable measurement errors.

When the conventional temperature measurement circuit 124 shown in FIG. 3 measures the diode 116 of the sensing chip 110, it switches between two current sources ($I$, n$I$) with an electronic switch. The temperature measurement range is 0 ~ 400 °K (absolute temperature), starting from 0°K. The first instance of measurement requires the electronic switch to switch to current source $I$, causing the external diode 116 to generate a voltage $V_{BE1}$. The second instance of measurement requires the electronic switch to switch to current source n$I$, causing the external diode 116 to generate a voltage $V_{BEn}$. The voltages $V_{BEn}$, $V_{BE1}$ are measured with an A/D converter. Then, the CPU 126 subtracts one of the two ADC values from the other to obtain a value corresponding to $\Delta V_{BE}$. The value is directly proportional to absolute temperature, as shown in FIG. 2B. Since voltage $V_{BE}$ is large and greater than voltage $V_{ref}$, the subtraction therefrom of a voltage $V_{off}$ or reduction of amplifier gain $G_2$ has to be carried out to enter the measurement range of the A/D converter. Owing to the reduction of gain $G_2$, the measurement result can only achieve an accuracy allowance of 1°or so, and the mathematical expression of the measurement of voltage $V_{BE}$ with the A/D converter is as follows:

$$\text{ADC}_n = \frac{V_{BEn} \cdot G_2 - V_{off}}{V_{ref}}, \quad \text{ADC}_1 = \frac{V_{BE1} \cdot G_2 - V_{off}}{V_{ref}}$$

$$\Delta\text{ADC} = \text{ADC}_n - \text{ADC}_1 = \frac{\left[(V_{BEn} \cdot G_2 - V_{off}) - (V_{BE1} \cdot G_2 - V_{off})\right]}{V_{ref}} = \frac{\Delta V_{BE} \cdot G_2}{V_{ref}}$$

$$= K_{cal2} \cdot T$$

where $G_2$ denotes amplification ratio (0.5-2), $V_{ref}$ denotes A/D converter reference voltage, and $V_{off}$ denotes A/D converter offset voltage.

To address the accuracy issue facing the measurement circuit shown in FIG. 3, it is feasible to move $V_{off}$ to an input terminal of an amplifier, so as to diminish input signals and increase the amplifier gain to $G_3$ as shown in FIG. 4. However, the measurement range is still 0 ~ 400° K, and the measurement result can achieve an accuracy allowance of 0.1°. The mathematical expression of measuring $\Delta V_{BE}$ with an A/D converter is as follows:

$$\Delta\text{ADC} = \text{ADC}_n - \text{ADC}_1 = \frac{\left[(V_{BEn} - V_{off}) \cdot G_3 - (V_{BE1} - V_{off}) \cdot G_3\right]}{V_{ref}} = \frac{\Delta V_{BE} \cdot G_3}{V_{ref}} = K_{cal3} \cdot T$$

where $G_3$ denotes amplification ratio (2~10), $V_{ref}$ denotes reference voltage of A/D converter, and $V_{off}$ denotes offset voltage of amplifier.

Therefore, when the driving chip 120 directly measures the diode 116 of an external heat sensor with the temperature measurement circuit 124 shown in FIG. 3 and FIG. 4, the temperature measurement accuracy is insufficient.

## SUMMARY OF THE INVENTION

Since the silicon transducer is manufactured by a semiconductor manufacturing process, the manifestation of the characteristics and physical quantity of the silicon transducer must be affected by temperature. For example, the result of the measurement of a thermopile device indicates a nonlinear relation between the voltage and the target temperature, and this would affect the accuracy of temperature measurement. In view of this, one objective of the present disclosure is to provide a technical solution for integrating the silicon transducer and a heater into a semiconductor substrate, and to use the heater to heat the semiconductor substrate so that the silicon transducer can operate at a predetermined temperature for obtaining stable transducing characteristics. For example, the heater is configured to have the ambient temperature of the thermopile device approach a target temperature, such that temperature measurement results and the target temperature approximate a linear relationship.

A conventional sensing chip is characterized by the integration of a thermopile device and a diode into a semiconductor substrate. The diode directly measures the ambient temperature of the thermopile device. However, a temperature measurement circuit for driving the sensing chip has to be integrated into a system product and then an additional calibration of the ambient temperature measured with the external diode is required, resulting in difficulties to carry out mass production and to enhance the accuracy of measurement. In view of this, another objective of the present disclosure is to provide a technical solution for integrating the thermopile device and at least one diode into a sensing chip, measuring the temperature difference between the sensing chip and a measuring chip (or driving chip) with the at least one diode, and allowing the measurement result of the measuring chip (or driving chip) to be calibrated prior to the system product integration, so as to render it possible to carry out mass production and enhance the accuracy of measurement.

Regarding a conventional temperature measurement system, there is a nonlinear relation between the result of measurement of a thermistor and the ambient temperature of a temperature sensing chip, and in consequence the system has to further calibrate the measurement result, resulting in difficulty for mass production. In view of this, yet another objective of the present disclosure is to provide a technical solution for measuring the ambient temperature of a sensing chip with a diode of the sensing chip and thereby measuring the temperature difference between the sensing chip and a measuring chip (or driving chip), so as for the measurement result and the temperature difference to be in a linear relation.

It is still yet another objective of the present disclosure to provide a sensing chip capable of heating the surroundings of a silicon transducer and a system and method for operating the silicon transducer after the surroundings of the silicon transducer has been heated.

To achieve the above and other objectives, the present disclosure provides a sensing chip integrated into a semiconductor substrate with a silicon transducer and at least one heater, wherein the silicon transducer and the heater are electrically connected to a measuring chip respectively, so that the measuring chip provides an electrical energy to the heater for heating the temperature of the semiconductor substrate, and the measuring chip measures the difference between the temperature of an object under test and the temperature of the semiconductor substrate by the silicon transducer.

To achieve the above and other objectives, the present disclosure provides a method of manufacturing a sensing chip, comprising the steps of: forming a silicon transducer on a semiconductor substrate by a semiconductor manufacturing process; and forming at least one heater on the semiconductor substrate by the semiconductor manufacturing process, wherein the silicon transducer and the heater are electrically connected to a measuring chip respectively, so that the measuring chip provides an electrical energy to the heater for heating the temperature of the semiconductor substrate, and the measuring chip measures the difference between the temperature of an object under test and the temperature of the semiconductor substrate by the silicon transducer.

To achieve the above and other objectives, the present disclosure provides a method of manufacturing a measuring chip, comprising the steps of: forming a plurality of nodes on a semiconductor substrate by a semiconductor manufacturing process, wherein at least one portion of the nodes is electrically connected to a sensing chip; forming a heating circuit on the semiconductor substrate by the semiconductor manufacturing process, wherein the heating circuit provides an electrical energy to a heater of the sensing chip through at least one portion of the nodes; and forming a first temperature measurement circuit on the semiconductor substrate by the semiconductor manufacturing process, the first temperature measurement circuit is electrically connected to a silicon transducer of the sensing chip through at least one portion of the nodes, wherein the first temperature measurement circuit measures the difference between the temperature of an object under test and the temperature of the sensing chip by the silicon transducer.

To achieve the above and other objectives, the present disclosure provides a temperature measurement system electrically connected to a sensing chip, the sensing chip comprising at least one heater and a silicon transducer, the temperature measurement system comprising: a heating circuit electrically connected to the heater and adapted to provide an electrical energy to the heater for heating the temperature of the sensing chip; and a first temperature measurement circuit electrically connected to the silicon transducer and adapted to measure the temperature difference between the temperature of an object under test and the temperature of the sensing chip through the silicon transducer after the electrical energy has been applied to the heater for heating the sensing chip.

To achieve the above and other objectives, the present disclosure provides a temperature measurement method comprising the steps of: forming a silicon transducer and a heater on a semiconductor substrate by a semiconductor manufacturing process; controlling an electrical energy to be applied to the heater, to allow the temperature of the semiconductor substrate to reach a predetermined value; and enabling the operation of the silicon transducer to sense the temperature difference between the temperature of an object under test and the temperature of the semiconductor substrate.

To achieve the above and other objectives, the present disclosure provides a temperature measurement method comprising the steps of: electrically connecting a measuring chip to a sensing chip, the sensing chip comprising a heater and a silicon transducer; providing, by the measuring chip, an electrical energy to be applied to the heater of the sensing chip; providing, by the measuring chip, a first temperature measurement circuit, the first temperature measurement circuit being electrically connected to the silicon transducer of the sensing chip; and controlling, by the measuring chip, the electrical energy to be applied to the heater to allow the temperature of the sensing chip to reach a predetermined value, controlling, by the measuring chip, the first temperature measurement circuit to measure the difference between the temperature of an object under test and the temperature of the sensing chip by the silicon transducer.

To achieve the above and other objectives, the present disclosure provides a temperature measurement system comprising: a first chip comprising at least one first PN junction element, the first PN junction element is arranged for sensing a temperature of the first chip; and a second chip electrically connected to the first chip and comprising: at least one second PN junction element arranged for sensing a temperature of the second chip; a multiple current source circuit for providing multiple currents respectively flowing through the first PN junction element and the second PN junction element, to respectively generate a plurality of first voltage signals associated with the first PN junction element and a plurality of second voltage signals associated with the second PN junction element; and a calculation unit for calculating the temperature difference between the first chip and the second chip according to the plurality of first voltage signals and the plurality of second voltage signals.

To achieve the above and other objectives, the present disclosure provides a temperature measurement method comprising the steps of: providing multiple currents flowing through at least one first PN junction element to generate a plurality of first voltage signals, wherein the first PN junction element is arranged at a first chip to sense the temperature of the first chip; providing multiple currents flowing through at least one second PN junction element to generate a plurality of second voltage signals, wherein the second PN junction element is arranged at a second chip to sense the temperature of the second chip; and calculating the plurality of first voltage signals and the plurality of second voltage signals to obtain an output associated with the temperature difference between the first chip and the second chip.

To achieve the above and other objectives, the present disclosure provides a temperature measurement method

comprising the steps of: electrically connecting a first chip and a second chip to establish at least one first loop; providing at least one first PN junction element in the first loop of the first chip; providing multiple currents at the second chip to flow through the first loop, to generate a plurality of first voltage signals associated with the first PN junction element; providing multiple currents at the second chip to flow through at least one second PN junction element, to generate a plurality of second voltage signals associated with the second PN junction element; and calculating the plurality of first voltage signals and the plurality of second voltage signals to obtain an output associated with the temperature difference between the first chip and the second chip.

To achieve the above and other objectives, the present disclosure provides a temperature measurement system comprising: at least one first PN junction element arranged at a first chip to sense the temperature of the first chip, and the first chip integrated with a silicon transducer and the at least one first PN junction element; at least one second PN junction element arranged at a second chip to sense the temperature of the second chip; a first temperature measurement circuit electrically connected to the silicon transducer for measuring a first difference value between the temperature of an object under test and the temperature of the first chip; a second temperature measurement circuit electrically connected to the first PN junction element and the second PN junction element for measuring a second difference value between the temperature of the first chip and the temperature of the second chip; a third temperature measurement circuit comprising at least one third PN junction element and arranged at the second chip for measuring to obtain a temperature value of the second chip; and a processing unit for calculating the first difference value, the second difference value and the temperature value of the second chip to obtain a temperature value of the object under test.

To achieve the above and other objectives, the present disclosure provides a temperature measurement method comprising the steps of: providing at least one first PN junction element arranged at a first chip to sense the temperature of the first chip, the first chip integrating with a silicon transducer and the at least one first PN junction element; providing at least one second PN junction element arranged at a second chip to sense the temperature of the second chip; measuring the silicon transducer to obtain a first difference value between the temperature of an object under test and the temperature of the first chip; measuring the first PN junction element and the second PN junction element to obtain a second difference value between the temperature of the first chip and the temperature of the second chip; measuring a temperature value of the second chip; and calculating the first difference value, the second difference value and the temperature value of the second chip to obtain a temperature value of the object under test.

To achieve the above and other objectives, the claimed invention provides a temperature measurement system comprising: at least one first PN junction element arranged at a first chip to sense the temperature of the first chip; at least one second PN junction element arranged at a second chip to sense the temperature of the second chip; a second temperature measurement circuit electrically connected to the first PN junction element and the second PN junction element, and the second temperature measurement circuit arranged at the second chip to measure a second difference value between the temperature of the first chip and the temperature of the second chip; a third temperature measurement circuit comprising at least one third PN junction element and arranged at the second chip for measuring to obtain a temperature value of the second chip; and a processing unit for calculating the second difference value and the temperature value of the second chip to obtain a temperature value of the first chip.

To achieve the above and other objectives, the claimed invention provides a temperature measurement method comprising the steps of: providing at least one first PN junction element arranged at a first chip to sense the temperature of the first chip; providing at least one second PN junction element arranged at a second chip to sense the temperature of the second chip; measuring the first PN junction element and the second PN junction element to obtain a second difference value between the temperature of the first chip and the temperature of the second chip; measuring a temperature value of the second chip; and calculating the second difference value and the temperature value of the second chip to obtain a temperature value of the first chip.

To achieve the above and other objectives, the present disclosure provides a temperature calculation method comprising the steps of: reading a first difference value stored in a memory, wherein the first difference value is the difference between the temperature of an object under test and the temperature of a sensing chip, and a silicon transducer of the sensing chip is used for sensing the difference between the temperature of the object under test and the temperature of the sensing chip; reading a second difference value stored in the memory, wherein the second difference value is the difference between the temperature of the sensing chip and the temperature of a measuring chip, the measuring chip is electrically connected to the silicon transducer; reading a temperature value stored in the memory, wherein the temperature value is the temperature of the measuring chip; and calculating the first difference value, the second difference value and the temperature value to obtain a temperature value of the object under test.

To achieve the above and other objectives, the present disclosure provides a temperature calculation method comprising the steps of: reading a second difference value stored in a memory, wherein the second difference value is the difference between the temperature of a sensing chip and the temperature of a measuring chip, the measuring chip is electrically connected to the sensing chip; reading a temperature value stored in the memory, wherein the temperature value is the temperature of the measuring chip; and calculating the second difference value and the temperature value to obtain a temperature value of the sensing chip.

To achieve the above and other objectives, the present disclosure provides a temperature measurement system comprising: at least one component node and a common node, are used for respectively electrically connecting to at least one first PN junction element, the first PN junction element is arranged at a first substrate to sense the temperature of the first substrate; when the first PN junction element is electrically connected to the component node and the common node, a first multiple current source circuit provides multiple currents to flow through the first PN junction element, so as to generate a plurality of first voltage signals; and a second multiple current source circuit provides multiple currents to flow through at least one second PN junction element, so as to generate a plurality of second voltage signals, the second PN junction element is arranged at a second substrate to sense the temperature of the second substrate, wherein the first voltage signals and the second voltage signals are associated with the temperature difference between the first substrate and the second substrate.

To achieve the above and other objectives, the present disclosure provides a method of manufacturing a measuring chip, comprising the steps of: forming at least one component node and a common node on a semiconductor substrate by a semiconductor manufacturing process, wherein the component node and the common node are electrically connected to at least one first PN junction element of a sensing chip respectively; forming a first multiple current source circuit on the semiconductor substrate by the semiconductor manufacturing process, the first multiple current source circuit providing multiple currents flowing through the first PN junction element; forming at least one second PN junction element on the semiconductor substrate by the semiconductor manufacturing process; and forming a second multiple current source circuit on the semiconductor substrate by the semiconductor manufacturing process, the second multiple current source circuit providing multiple currents flowing through a second PN junction element, wherein the first PN junction element and the second PN junction element are associated with the temperature difference between the sensing chip and the measuring chip.

To achieve the above and other objectives, the present disclosure provides a sensing chip integrated into a semiconductor substrate with a silicon transducer and at least one first PN junction element, wherein the silicon transducer and the first PN junction element are each electrically connected to a measuring chip, so that the measuring chip measures the difference between the temperature of an object under test and the temperature of the semiconductor substrate by the silicon transducer, and the measuring chip measures the difference between the temperature of the semiconductor substrate and the temperature of the measuring chip by the first PN junction element.

To achieve the above and other objectives, the present disclosure provides a method of manufacturing a sensing chip, comprising the steps of: forming a silicon transducer on a semiconductor substrate by a semiconductor manufacturing process; and forming at least one first PN junction element on the semiconductor substrate by the semiconductor manufacturing process, wherein the first PN junction element is used for electrically connecting to a measuring chip, so that the measuring chip measures the difference between the temperature of the semiconductor substrate and the temperature of the measuring chip by the first PN junction element.

To achieve the above and other objectives, the present disclosure provides a sensing chip, with at least one PN junction element arranged at a semiconductor substrate, wherein the PN junction element is used for electrically connecting to a measuring chip, so that the measuring chip measures the difference between the temperature of the sensing chip and the temperature of the measuring chip by the PN junction element.

To achieve the above and other objectives, the present disclosure provides a method of manufacturing a sensing chip, comprising the step of forming at least one PN junction element on a semiconductor substrate by a semiconductor manufacturing process, wherein the PN junction element is used for electrically connecting to a measuring chip, so that the measuring chip measures the difference between the temperature of the sensing chip and the temperature of the measuring chip through the PN junction element.

**BRIEF DESCRIPTION OF THE DRAWINGS**

FIG. 1A (PRIOR ART) is a block diagram of a conventional temperature measurement system using a thermopile device and a thermistor.

FIG. 1B (PRIOR ART) is a graph of a voltage signal of the thermopile device versus a target temperature, measured with a target temperature measurement circuit.

FIG. 2A (PRIOR ART) is a block diagram of another conventional temperature measurement system including a sensing chip which a thermopile device and a diode are integrated into by a semiconductor manufacturing process, with the diode adapted to measure the ambient temperature of the thermopile device.

FIG. 2B (PRIOR ART) is a graph of voltage measured across an external diode by a temperature measurement circuit 124 of a driving chip 120 shown in FIG. 2A against temperature.

FIG. 3 (PRIOR ART) is a circuit diagram of the external diode measured with a conventional temperature measurement circuit of the driving chip shown in FIG. 2A.

FIG. 4 (PRIOR ART) is a circuit diagram of the external diode measured with another conventional temperature measurement circuit of the driving chip shown in FIG. 2A.

FIG. 5 is a block diagram of a temperature measurement system of the present disclosure, with the temperature measurement system comprising a sensing chip with a heater and a measuring chip with a heating circuit.

FIG. 6 is a circuit diagram of an internal diode pair measured with a temperature measurement circuit of the measuring chip of the present disclosure.

FIG. 7 is a block diagram of the sensing chip comprising a heater, a silicon transducer and a diode pair according to the present invention, with the silicon transducer being a thermopile device, and the diode pair being adapted to measure a temperature difference.

FIG. 8 is a schematic view of a process flow of a silicon transducer temperature measurement method carried out with the sensing chip of the present disclosure.

FIG. 9 is a schematic view of a process flow of another silicon transducer temperature measurement method carried out with the sensing chip of the present disclosure.

FIG. 10 is a table of temperature test results of heating up sample #1 of the sensing chip shown in FIG. 7.

FIG. 11 is a table of temperature test results of heating up sample #2 of the sensing chip shown in FIG. 7.

FIG. 12A through FIG. 12D are circuit diagrams of a multiple current source in different aspects, respectively.

FIG. 13 is a block diagram of a temperature difference measurement circuit in the first embodiment of the present disclosure.

FIG. 14A is a circuit diagram of the temperature difference measurement circuit in the first embodiment of the present disclosure, wherein the temperature difference measurement circuit is configured for sensing inner and outer temperature differences based on a diode pair having a junction area ratio of 1:n, and comprises a multiple current source in an aspect.

FIG. 14B is another circuit diagram of the temperature difference measurement circuit in the first embodiment of the present disclosure, wherein the temperature difference measurement circuit is configured for sensing inner and outer temperature differences based on a diode pair having equal junction areas, and comprises a multiple current source in another aspect.

FIG. 15 is a block diagram of the temperature difference measurement circuit in the second embodiment of the present disclosure.

FIG. 16A is a circuit diagram of the temperature difference measurement circuit in the second embodiment of the present disclosure, wherein the temperature difference measurement circuit is configured for sensing inner and outer temperature differences based on a diode pair having a junction area ratio of 1:n, and comprises a multiple current source in an aspect.

FIG. 16B is another circuit diagram of the temperature difference measurement circuit in the second embodiment of the present disclosure, wherein the temperature difference measurement circuit is configured for sensing inner and outer temperature differences based on a diode pair having a junction area ratio of 1:n, and comprises a multiple current source in another aspect.

FIG. 16C is yet another circuit diagram of the temperature difference measurement circuit in the second embodiment of the present disclosure, wherein the temperature difference measurement circuit is configured for sensing inner and outer temperature differences based on one single diode, and comprises a multiple current source in yet another aspect.

FIG. 17A and FIG. 17B are block diagrams of temperature difference calculation blocks of the temperature difference measurement circuits in the first and second embodiments of the present disclosure, respectively.

FIG. 18 is a block diagram of the temperature difference measurement circuit shown in FIG. 16C electrically connected to the temperature difference calculation blocks shown in FIG. 17B.

FIG. 19 is a schematic view of the temperature measurement range of the temperature difference measurement circuit shown in FIG. 18.

FIG. 20 is an equivalent circuit diagram of the temperature difference measurement circuit shown in FIG. 18

FIG. 21 is another equivalent circuit diagram of the temperature difference measurement circuit shown in FIG. 18.

FIG. 22 is a block diagram of the temperature measurement system of the present disclosure.

FIG. 23 is a schematic view of a process flow of a temperature calculation method of the present disclosure, with the temperature calculation method applicable to the microprocessor shown in FIG. 22.

FIG. 24 is a schematic view of the temperature measurement range of the temperature measurement system shown in FIG. 22.

FIG. 25 is a block diagram of the temperature measurement system of the claimed invention.

FIG. 26 is a block diagram of the temperature measurement system of the claimed invention.

FIG. 27 is a schematic view of a process flow of the temperature calculation method of the claimed invention, wherein the temperature calculation method can be implemented in the temperature measurement system shown in FIG. 25 and FIG. 26.

**DETAILED DESCRIPTION OF THE EMBODIMENTS**

All the technical and scientific terms used herein each carry the same meaning as usually understood by persons skilled in the art. The terms are explained below to provide their basic definitions rather than place any limitations on the claims of the present invention. The conjunction "and/or" is used herein to indicate that words or expressions are to be taken together or individually.

Sensor: a component or apparatus for measuring a physical quantity.

Transducer: a component or apparatus for measuring a physical quantity and converting it into another physical quantity for manifestation thereof.

Silicon process: a process of manufacturing elements or apparatuses from silicon materials.

Semiconductor manufacturing process: a series of photographing and chemical processing steps for forming elements or apparatuses from semiconductor materials on a semiconductor substrate.

Silicon transducer: a transducer manufactured by a silicon process and a semiconductor manufacturing process, for example, a thermopile device or a piezoelectric device.

Semiconductor substrate: a substrate carrying a formed semiconductor element, that is, wafer, and may be classified as a P-substrate and an N-substrate

PN junction element: a semiconductor element formed on the semiconductor substrate by a semiconductor manufacturing process.

Junction area: a PN junction area (or layout area) of a PN junction element (in forward bias condition).

Electronic circuit: a loop formed by various electronic components, allowing a current to flow through and performing calculation of electric signals.

Chip: an electronic circuit implemented on one single semiconductor substrate by semiconductor manufacturing process, and having a plurality of nodes to be electrically connected to an external component or electronic circuit.

Packaging: a technology for connecting and securing a package with a chip, assembling into a complete system and ensuring comprehensive performance of the overall system.

Multiple current source: It is capable of providing the same or different current values at a plurality of outputs, or providing different current values at one output. This aspect includes a plurality of current sources with multiple outputs, and each output has a current value identical to or different from another one. Alternatively, it may include a plurality of current sources and one output that selectively outputs the same or different current values. It may include one current source and multiple outputs, each output selectively outputting the same current value.

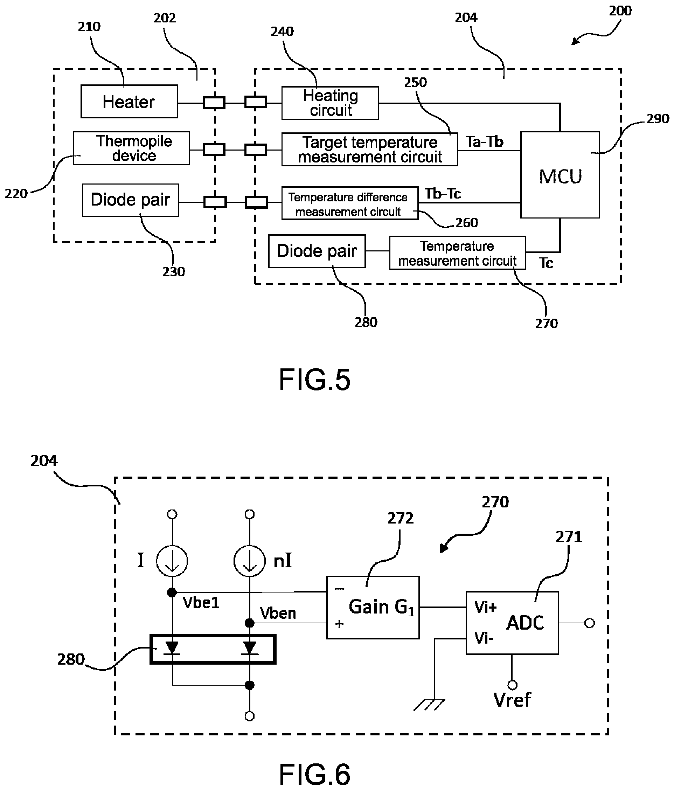

Referring to FIG. 5, there is shown a block diagram of a temperature measurement system of the present disclosure. In an embodiment of the present disclosure, a temperature measurement system 200 measures a target temperature of an object under test. The temperature measurement system 200 comprises a sensing chip 202 having a heater 210 and a measuring chip 204 having a heating circuit 240. The measuring chip 204 is electrically connected to the sensing chip 202 to heat the sensing chip 202 until the sensing chip 202 reaches a predetermined value at which the measurement of the target temperature occurs. The heating circuit 240 of the measuring chip 204 provides an electrical energy P to the heater 210 of the sensing chip 202. The electrical energy P is expressed by the equation $P=VI$, where V denotes the voltage applied to the heater 210, and I denotes the current flowing through the heater 210.

In addition to the heater 210, the sensing chip 202 further comprises a silicon transducer and a heat sensing component. In an embodiment of the present disclosure, the silicon transducer is exemplified by a thermopile device 220, and the heat sensing component is exemplified by a diode pair 230. In addition to the heating circuit 240, the measuring chip 204 further comprises a target temperature measurement circuit 250, a temperature difference measurement circuit 260, a temperature measurement circuit 270 and a microcontroller unit (MCU) 290, wherein the microcontroller unit 290 controls the heating circuit 240; and the microcontroller unit 290 receives the measured values from the circuits 250, 260, 270 to calculate the target temperature. Take an ear thermometer as an example, the temperature measurement system 200 heats the sensing chip 202 so that the ambient temperature of the thermopile device 220 approximates to but not exceed 37°C, enabling the thermopile device 220 to measure a human body temperature and regard it as the target temperature, allowing the relation between the measurement result of the target temperature measurement circuit 250 and the target temperature to approach a linear relation.

When the measuring chip 204 is electrically connected to the sensing chip 202, the heating circuit 240 is electrically connected to the heater 210 to raise the temperature Tb of the sensing chip 202 to reach a predetermined value. The target temperature measurement circuit 250 is electrically connected to the thermopile device 220 to measure the temperature difference Ta-Tb between the target temperature Ta and the temperature Tb of the sensing chip 202. The temperature difference measurement circuit 260 is electrically connected to the diode pair 230 to measure the temperature difference Tb-Tc between the temperature Tb of the sensing chip 202 and the temperature Tc of the measuring chip 204. The temperature measurement circuit 270 is electrically connected to a heat sensing component to measure the temperature Tc of the measuring chip 204. The heat sensing component is exemplified by a built-in diode pair 280 of the measuring chip 204. The microcontroller unit 290 calculates the sum of the measured value of temperature difference Ta-Tb, the measured value of temperature difference Tb-Tc and the measured value of temperature Tc to calculate the target temperature Ta. Furthermore, the microcontroller unit 290 calculates the sum of the measured value of temperature difference Tb-Tc and the measured value of temperature Tc to calculate the temperature Tb of the sensing chip 202, and thereby controls the heating circuit 240 to provide an electrical energy so that the temperature Tb of the sensing chip 202 is heated to reach a predetermined value. Therefore, the present disclosure is effective in enhancing the accuracy of the measured values of the temperature difference measurement circuit 260. Moreover, the temperature measurement circuit 270 accurately calibrates the built-in diode pair 280 of the measuring chip 204 such that the measuring chip 204 need not perform an additional calibration of external components in order for mass production to take place. In addition, the temperature measurement system 200 is conducive to the enhancement of the accuracy of the target temperature Ta measured.

According to the present disclosure, a temperature measurement method carried out with the measuring chip 204 of the temperature measurement system 200 shown in FIG. 5 comprises the steps of: providing a plurality of nodes, at least one portion of the nodes are electrically connected to a sensing chip 202, wherein the sensing chip 202 comprises a heater 210, a silicon transducer and a heat sensor, with the silicon transducer exemplified by the thermopile device 220, and the heat sensor exemplified by the diode pair 230; providing an electrical energy by a heating circuit 240, the electrical energy is used for applying to the heater 210 of the sensing chip 202 through at least one portion of the nodes, so as to heat the sensing chip 202 to reach temperature Tb; providing a first temperature measurement circuit, the first temperature measurement circuit being a target temperature measurement circuit 250, which electrically connected to the silicon transducer of the sensing chip 202 through at least one portion of the nodes to measure the temperature difference Ta-Tb between a target temperature Ta and the temperature Tb of the sensing chip 202; providing a second temperature measurement circuit, the second temperature measurement being a temperature difference measurement circuit 260, which electrically connected to the heat sensor of the sensing chip 202 through at least one portion of the nodes to measure the temperature difference Tb-Tc between the temperature Tb of the sensing chip 202 and the temperature Tc of the measuring chip 204; and providing a third temperature measurement circuit, the third temperature measurement circuit being a temperature measurement circuit 270, which electrically connected to the built-in diode pair 280 of the measuring chip 204 to measure the temperature Tc of the measuring chip 204, wherein the target temperature measurement circuit 250 is enabled to measure the temperature difference Ta-Tb between a target temperature Ta and the temperature Tb of the sensing chip 202 after the temperature Tb of the sensing chip 202 is heated to reach a predetermined value.

The temperature measurement method for the measuring chip 204 further comprises the step of calculating the sum of the temperature difference Ta-Tb, the temperature difference Tb-Tc and the temperature Tc to obtain the target temperature Ta. The temperature measurement method further comprises the step of calculating the sum of the temperature difference Tb-Tc and the temperature Tc to obtain the temperature Tb of the sensing chip 202 and thereby control the electrical energy so as to heat the temperature Tb of the sensing chip 202 to reach a predetermined value. In an embodiment of the present disclosure, the temperature measurement method entails providing the measured values of temperature difference Ta-Tb, temperature difference Tb-Tc and temperature Tc to a microcontroller unit 290, the microcontroller unit 290 being built-in and arranged in the measuring chip 204 or electrically connected to the measuring chip 204 through at least one portion of the nodes. The microcontroller unit 290 calculates the sum of the temperature difference Ta-Tb, the temperature difference Tb-Tc and the temperature Tc to obtain the target temperature Ta, and calculates the sum of the temperature difference Tb-Tc and the temperature Tc to obtain the temperature Tb of the sensing chip 202 and thereby control the heating circuit 240 to provide an electrical energy so as to heat the temperature Tb of the sensing chip 202 to reach a predetermined value.

According to the present disclosure, a method of manufacturing the measuring chip 204 shown in FIG. 5 comprises the steps of: forming a plurality of nodes on a semiconductor substrate by a semiconductor manufacturing process, wherein at least one portion of the nodes are electrically connected to a sensing chip 202, with the sensing chip 202 comprising a heater 210, a silicon transducer and a heat sensor, with the silicon transducer exemplified by the thermopile device 220, and the heat sensor exemplified by the diode pair 230; forming a heating circuit 240 on the semiconductor substrate by a semiconductor manufacturing process, wherein the heating circuit 240 provides an electrical energy, the electrical energy is used for applying to the heater 210 of the sensing chip 202 through at least one portion of the nodes; forming a first temperature measurement circuit on the semiconductor substrate by a semiconductor manufacturing process, with the first temperature measurement circuit being a target temperature measurement circuit 250 electrically connected to the silicon transducer of the sensing chip 202 through at least one portion of the nodes to measure the temperature difference Ta-Tb between a target temperature Ta and the temperature Tb of the sensing chip 202; forming a second temperature measurement circuit on the semiconductor substrate by a semiconductor manufacturing process, the second temperature measurement circuit is a temperature difference measurement circuit 260 electrically connected to the heat sensor of the sensing chip 202 through at least one portion of the nodes to measure the temperature difference Tb-Tc between the temperature Tb of the sensing chip 202 and the temperature Tc of the measuring chip 204; and forming a third temperature measurement circuit and the diode pair 280 on the semiconductor substrate by a semiconductor manufacturing process, with the third temperature measurement circuit being a temperature measurement circuit 270 electrically connected to the diode pair 280 to measure the temperature Tc of the measuring chip 204.

Referring to FIG. 6, there is shown a circuit diagram of the diode pair 280 measured with a temperature measurement circuit 270 of the measuring chip 204 of the present disclosure. The temperature measurement circuit 270 provides two currents having an electrical energy ratio of 1:n to flow through the diode pair 280 having equal junction areas, respectively, as shown in FIG. 6, i.e. a junction area of one diode of the diode pair 280 is substantially equal to a junction area of another one diode of the diode pair 280. The diode pair 280 generates voltage signals $V_{be1}$, $V_{ben}$, respectively. The difference $\Delta V_{BE}$ between the two voltage signals is amplified by an amplifier 272 with gain $G_1$ and then processed by the A/D converter 271 to yield a measurement result directly proportional to the temperature Tc of the measuring chip 204 with the built-in diode pair 280.

A differential operation amplifier OP exemplified by the amplifier 272 is provided. The voltage signals $V_{ben}$, $V_{be1}$ are inputted into the positive terminal and negative terminal of the differential operation amplifier OP to generate a voltage directly proportional to $\Delta V_{BE}$. Then, the A/D converter 271 measures the output voltage of the differential operation amplifier OP and converts the voltage to an absolute temperature, as expressed by the mathematical expression below. The ADC measurements are directly proportional to the absolute temperature.

$$V_{ben} - V_{be1} = \Delta V_{BE} = \frac{kT_C}{q}\ln(n), \text{ and thus } T_C \propto \Delta V_{BE}$$

$$\text{ADC} = \frac{\Delta V_{BE} \cdot G_1}{V_{ref}} = \frac{kT_C}{q}\ln(n) \cdot \frac{G_1}{V_{ref}} = K_{cal1} \cdot T_C$$

where calibration coefficient $K_{cal1} = \frac{kG_1\ln(n)}{qV_{ref}}$, $G_1$ denotes amplification ratio, $V_{ref}$ denotes reference voltage of the ADC, $k$ denotes Boltzmann's constant, and $q$ denotes electric charge of electron.

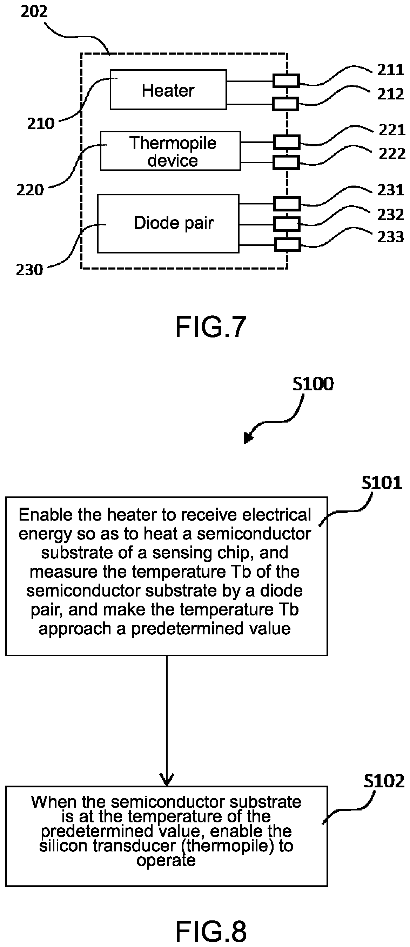

Referring to FIG. 7, there is shown a block diagram of the sensing chip 202 comprising a heater 210, a silicon transducer and the diode pair 230 according to the present disclosure, with the silicon transducer exemplified by the thermopile device 220 and the diode pair 230 adapted to measure temperature differences. In an embodiment of the present disclosure, a method of manufacturing the sensing chip 202 comprises: forming and integrating the heater 210, the thermopile device 220 and the diode pair 230 onto a semiconductor substrate by a semiconductor manufacturing process; forming nodes 211, 212 on the semiconductor substrate by the semiconductor manufacturing process to electrically connect the heater 210; forming nodes 221, 222 on the semiconductor substrate by the semiconductor manufacturing process to electrically connect the thermopile device 220; and forming component nodes 231, 232 and a common node 233 on the semiconductor substrate by the semiconductor manufacturing process to electrically connect the diode pair 230. Referring to FIG. 5, when the measuring chip 204 is electrically connected to the sensing chip 202, the heating circuit 240 is electrically connected to the heater 210 through the nodes 211, 212, so as to provide an electrical energy P. The target temperature measurement circuit 250 is electrically connected to the thermopile device 220 through the nodes 221, 222, so as to measure the temperature difference Ta-Tb between the target temperature Ta and the temperature Tb of the sensing chip 202. The temperature difference measurement circuit 260 is electrically connected to the diode pair 230 through the component nodes 231, 232 and the common node 233, so as to measure the temperature difference Tb-Tc between the temperature Tb of the sensing chip 202 and the temperature Tc of the measuring chip 204. The diode pair 230 comprises a pair of diodes and has three nodes. One of the nodes is the common node 233. The common node 233 is the P-terminal or N-terminal of the diode pair 230, depending on the diode pair operating in conjunction with the temperature difference measurement circuit 260. The diode pair 230 is used for sensing the temperature of the semiconductor substrate being heated or sensing the ambient temperature of the thermopile device 220.

The heater 210 for use in heating the sensing chip 202 can be a resistor, diode and/or a current source circuit designed with an MOSFET circuit. , and the resistor, diode and/or current source circuit can be formed on a semiconductor substrate by a semiconductor manufacturing process in order to manufacture the sensing chip 202. In a variant embodiment of the present disclosure, when the heater 210 is the resistor, V denotes the voltage applied to the resistor, and I denotes the current flowing through the resistor. When the heater 210 is the diode, $V_d$ denotes the forward bias of the diode, $I_d$ denotes the conducting current of the diode , and the consumed power $P=V_dI_d$, the heater 210 allows to increase the consumed power P using multiple diodes connected in series. When the heater 210 is a current source circuit designed with an MOSFET circuit, I denotes the current generated by the current source circuit, V denotes the operating voltage of the current source circuit, and the consumed power $P=VI$, the heater 210 allows to increase the consumed power P using multiple current source circuits connected in parallel.

Regarding the sensing chip 202 shown in FIG. 7 and FIG. 5, the present disclosure provides a method of manufacturing a sensing chip, comprising the steps of: forming a plurality of nodes 211, 212, 221, 222, 231, 232, 233 on a semiconductor substrate by a semiconductor manufacturing process, with the nodes being adapted to be electrically connected to a measuring chip 204, wherein the measuring chip 204 comprises a heating circuit 240, a target temperature measurement circuit 250 and a temperature difference measurement circuit 260; forming at least one heater 210 on the semiconductor substrate by the semiconductor manufacturing process, with the heater 210 being electrically connected to the nodes 211, 212; forming a silicon transducer on the semiconductor substrate by the semiconductor manufacturing process, with the silicon transducer being exemplified by the thermopile device 220 and being electrically connected to the nodes 221, 222; and forming a diode pair 230 on the semiconductor substrate by the semiconductor manufacturing process, with the diode pair 230 being electrically connected to the component nodes 231, 232 and the common node 233. The heating circuit 240 of the measuring chip 204 can provide an electrical energy P to the heater 210 for heating the temperature of the semiconductor substrate. The target temperature measurement circuit 250 of the measuring chip 204 is electrically connected to the silicon transducer, so as to measure the difference between the temperature of an object under test and the temperature of the semiconductor substrate. The temperature difference measurement circuit 260 of the measuring chip 204 is electrically connected to the diode pair 230 to measure the difference between the temperature of the semiconductor substrate and the temperature of the measuring chip 204.

Referring to FIG. 8, there is shown a schematic view of a process flow of a temperature measurement method S100 performed by the sensing chip 202 on a silicon transducer according to the present disclosure. According to the present disclosure, the silicon transducer is applicable to a temperature measurement system, such as an ear thermometer. The temperature measurement system uses the silicon transducer to carry out the temperature measurement method in accordance with the process flow schematic view of FIG. 8. According to the present disclosure, the temperature measurement system is set with a predetermined value, such as, 37°C. In a preferred embodiment of the present disclosure, the silicon transducer is exemplified by the thermopile device 220, the heater, the silicon transducer and a diode pair to be integrated onto a semiconductor substrate by a semiconductor manufacturing process to form a sensing chip 202. The sensing chip 202 is electrically connected to a measuring chip 204. The measuring chip 204 is electrically connected to the heater, the silicon transducer and the diode pair of the sensing chip 202, as shown in FIG. 5. Thus, the temperature Tb of the semiconductor substrate or the ambient temperature of the silicon transducer is sensed by the diode pair, and the heater is controlled to enable the semiconductor substrate at temperature of the predetermined value, so that the silicon transducer can start a sensing operation. The first difference value (Ta-Tb) outputted from the target temperature measurement circuit 250 of the measuring chip 204 is the difference between the target temperature Ta of an object under test and the temperature Tb of the semiconductor substrate. The second difference value (Tb-Tc) outputted from the temperature difference measurement circuit 260 is the difference between the temperature Tb of the semiconductor substrate and the temperature Tc of the measuring chip 204. The temperature measurement circuit 270 outputs the temperature Tc of the measuring chip 204. In another embodiment, the measuring chip 204 is measured with a temperature measurement circuit to output the temperature Tb of the semiconductor substrate, so as to replace the temperature difference measurement circuit 260 and temperature measurement circuit 270.

According to the present disclosure, the temperature measurement method S100 for the silicon transducer comprises two steps described below. In step S101, the measuring chip 204 causes an electrical energy P to be provided to the sensing chip 202 and enables the heater to receive the electrical energy P for heating the semiconductor substrate and thus raise its temperature Tb such that the temperature Tb approximates to a system-configured predetermined value, with the temperature Tb being less than the system-configured predetermined value. With the heater and the silicon transducer being integrated onto a semiconductor substrate, the temperature Tb of the semiconductor substrate is the ambient temperature of the silicon transducer. The measuring chip 204 controls the heating process of the semiconductor substrate through the diode pair of the sensing chip 202. Then, in step S102, with the semiconductor substrate being at the predetermined temperature, the measuring chip 204 enables the operation of the silicon transducer, so as to sense the difference between the target temperature of an object under test and the temperature of the semiconductor substrate.

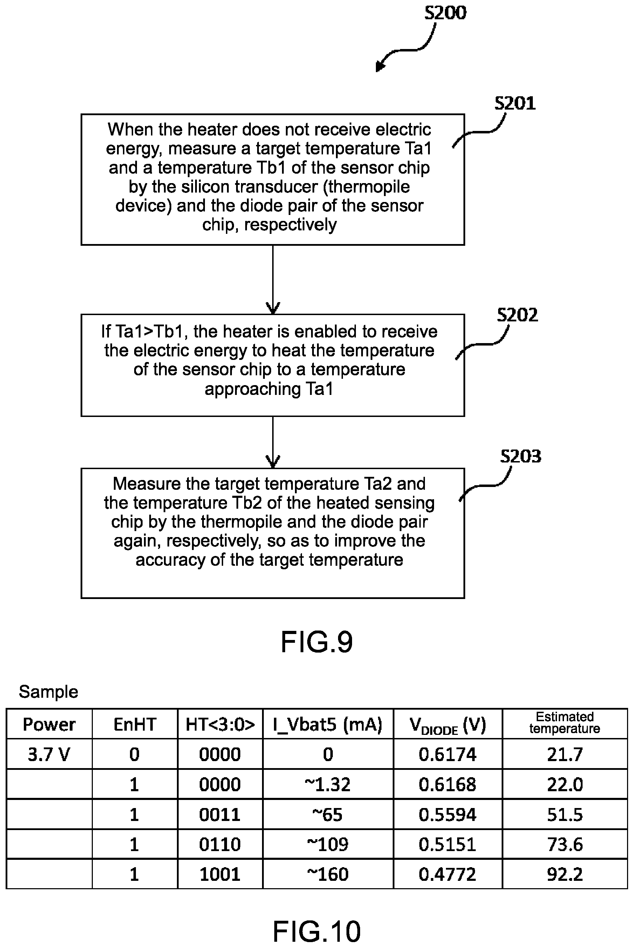

Referring to FIG. 9, there is shown a schematic view of a process flow of a temperature measurement method S200 performed by the sensing chip 202 on another silicon transducer according to the present disclosure. According to the present disclosure, the silicon transducer is applicable to a temperature measurement system, such as an ear thermometer. The temperature measurement system uses the silicon transducer to perform the temperature measurement method in accordance with the process flow schematic view of FIG. 9. According to the present disclosure, the temperature measurement system is configured with a predetermined value, say, 37°C. In a preferred embodiment of the present disclosure, the silicon transducer is exemplified by the thermopile device 220, allowing the heater, the silicon transducer and the diode pair to be integrated onto a semiconductor substrate by a semiconductor manufacturing process to form a sensing chip 202. The sensing chip 202 is electrically connected to a measuring chip 204. The measuring chip 204 is electrically connected to the heater, the silicon transducer and the diode pair of the sensing chip 202, as shown in FIG. 5.

According to the present disclosure, the temperature measurement method S200 for the silicon transducer comprises the steps described below. In step S201, when the measuring chip 204 does not provide any electrical energy to the sensing chip 202 in which the heater is not enabled to operate or the heater does not receive any electrical energy, the measuring chip 204 electrically connects to the silicon transducer and the diode pair, such that the measuring chip 204 measures and obtains the target temperature Ta1 of an object under test and the temperature Tb1 (i.e., the temperature of the semiconductor substrate) of the sensing chip 202. Then, in step S202, if temperature Ta1 is greater than the temperature Tb1, the measuring chip 204 provides an electrical energy P to the sensing chip 202 and thereby enables the heater to receive the electrical energy P to heat temperature of the semiconductor substrate and enable the temperature of the sensing chip 202 to approach the temperature Ta1 but less than the temperature Ta1 does. Next, in step S203, the measuring chip 204 uses the silicon transducer and the diode pair to measure and obtain the target temperature Ta2 and the temperature Tb2 of the heated sensing chip 202. The difference in the resultant measurement accuracy between step S201 and step S203 is explained below. In step S201, the silicon transducer performs its sensing operation in the presence of a large difference between the target temperature Ta1 and the temperature Tb1, and thus the manifestation of the characteristics and physical quantity of the silicon transducer is susceptible to the ambient temperature. By contrast, in step S203, the silicon transducer performs its sensing operation in the presence of a small difference between the target temperature Ta2 and the temperature Tb2 of the heated sensing chip 202, and thus the manifestation of the characteristics and physical quantity of the silicon transducer is insusceptible to the ambient temperature, so that the target temperature Ta2 exhibits better measurement accuracy than the temperature Ta1.

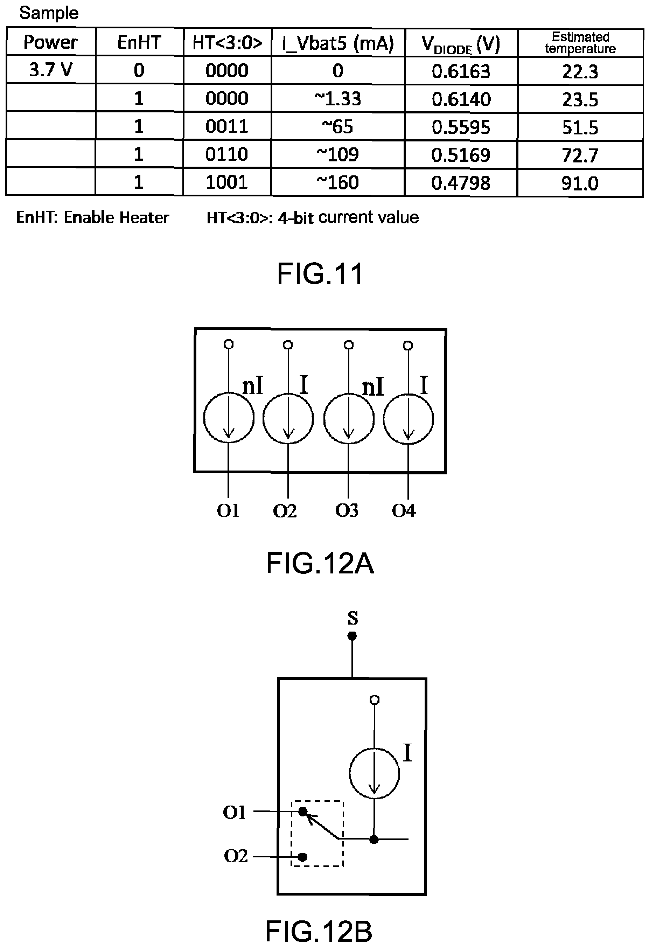

Referring to FIG. 10 and FIG. 11, there are shown tables of temperature test results of heating sample #1 and sample #2 of the sensing chip shown in FIG. 7, respectively. In the embodiment of the present disclosure, the heater 210 of the sensing chip 202 is a current source circuit designed with an MOSFET circuit and implemented in the form of multiple current source circuits connected in parallel to increase the electrical energy P, and setting different switching in current source circuit by using current instruction HT<3:0> in order to achieve the purpose of heating the semiconductor substrate of the sensing chip 202.

Referring to the tables shown in FIG. 10 and FIG. 11, Power denotes the operating voltage provided to the heater, EnHT denotes an enabling signal of the heater, HT<3:0> denotes 4-bit configuration current instructions, I_Vbat5(mA) denotes the current actually measured with an ammeter, and V_DIODE(V) denotes the voltage actually measured with a built-in diode temperature sensor. The calculated temperature is the temperature of sensing chip samples #1, #2, as calculated by substituting V_DIODE into a look-up table. Therefore, the heating temperature test results shown in FIG. 10 and FIG. 11 indicate the following: The heater operating at an operating voltage is effective in heating up the semiconductor substrate of the sensing chip 202 with the calculated temperature obtained with the built-in diode temperature sensor of the sensing chip 202, as the current increases.

Therefore, given the sensing chip, measuring chip and temperature measurement system provided by the present disclosure, the sensing chip is advantageously characterized by the integration of a silicon transducer and a heater onto a semiconductor substrate to allow the silicon transducer operating at a fixed temperature after heating and thereby exhibit stable transducing characteristics. Moreover, the heating circuit of the measuring chip provides an electrical energy to the heater of the sensing chip for raising the temperature of the semiconductor substrate, so that the silicon transducer performs temperature measurement at a temperature which approximates to a target temperature or at a predetermined temperature configured by the system. The silicon transducer is exemplified by a thermopile device. The present disclosure provides a technical solution as follows:

The ambient temperature is raised such that the thermopile device starts measuring an output voltage of the thermopile device only after approaching a target temperature or only at a predetermined temperature, so that a nonlinear relation between the output voltage and the measured target temperature approaches a linear relation, render it easy for the temperature measurement system to calibrate the measured target temperature, and thus greatly enhance the accuracy of the measurement results. The technical solution provided by the present disclosure is further advantageous in that the measurement of the output voltage of the thermopile device begins only after the sensing chip is heated to approach the target temperature to be measured, so as the voltage signals generated by the thermopile device is diminished. When the temperature measurement system substitutes the voltage signals into a look-up table to calculate the temperature, the error of the temperature measurement is also reduced and temperature accuracy is enhanced.

According to the technical solution of the present disclosure, the operation of the thermopile device is enabled only after the sensing chip is heated to approach the target temperature to be measured, so as to reduce the effect of the nonlinear relation of the thermopile device associated with the temperature of the sensing chip, and calibrate a built-in heat sensor with the measuring chip for measuring the temperature of the sensing chip accurately. Therefore, the temperature measurement system requires a temperature difference measurement circuit and is able to accurately measure the difference between the temperature of the sensing chip and the temperature of the measuring chip without performing any calibration, so as to further enhance the accuracy of the measurement results of the target temperature calculated with the temperature measurement system.

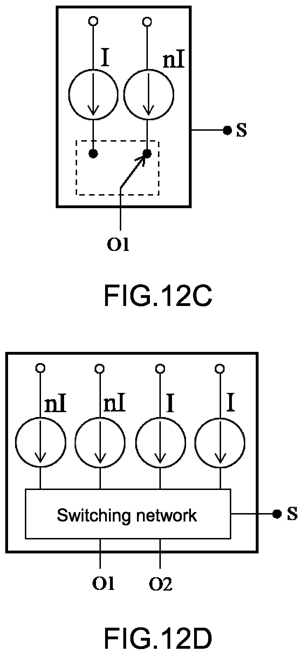

Further description of the temperature difference measurement circuit of the temperature measurement system is presented later. Various circuits of multiple current sources are described below and depicted by FIG. 12A through FIG. 12D. FIG. 12A shows a multiple current source that comprises four current sources and four outputs, with the four outputs O1, O2, O3, O4 providing equal or different currents I, nI. The multiple current source shown in FIG. 12B comprises one current source and two outputs, with the equal current I being selectively provided at the two outputs O1, O2 according to a selection signal S. The multiple current source shown in FIG. 12C comprises two current sources and one output, allowing the output O1 to selectively provide two different currents I, nI according to the selection signal S. The multiple current source shown in FIG. 12D comprises four current sources and two outputs, allowing the two outputs O1, O2 to selectively provide equal or different currents I, nI according to the selection signal S.

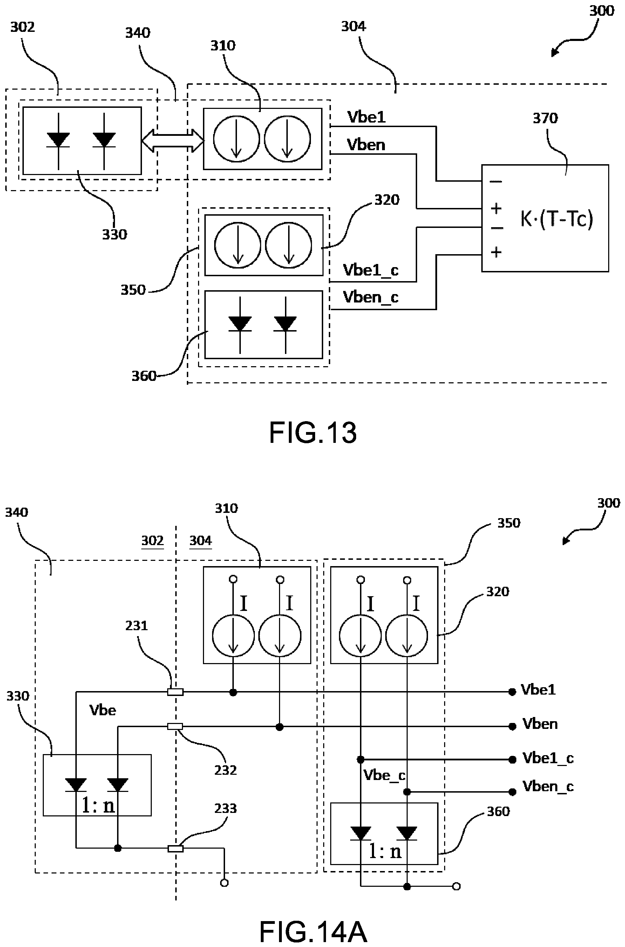

Regarding the temperature measurement system 300 of the present disclosure, the measuring chip 304 is electrically connected to a sensing chip 302 to establish a first loop 340, wherein the sensing chip 302 is referred to as the first chip, the measuring chip 304 is referred to as the second chip. In the first embodiment of the temperature difference measurement circuit of the present disclosure as illustrated by the circuit block diagram of FIG. 13, the measuring chip 304 comprises a second loop 350, a first multiple current source 310 and a second multiple current source 320, wherein the second loop 350 is electrically connected to at least one second diode or second diode pair 360 and the second multiple current source 320, so as to generate second voltage signals Vbe1_c, Vben_c associated with the temperature $T_c$ of the measuring chip 304. The first loop 340 is electrically connected to at least one first diode or first diode pair 330 of the sensing chip 302 and the first multiple current source 310, so as to generate first voltage signals Vbe1, Vben associated with the temperature $T$ of the sensing chip 302. The temperature difference calculation unit 370 performs computation on the voltage signals Vbe1, Vben, Vbe1_c, Vben_c to obtain the temperature difference associated with the temperature $T$ of the sensing chip 302 and the temperature $T_c$ of the measuring chip 304. In the embodiment of the present disclosure, the first diode pair 330 of the sensing chip 302 is a first PN junction element formed on a semiconductor substrate by a semiconductor manufacturing process, and the second diode pair 360 of the measuring chip 304 is a second PN junction element formed on a semiconductor substrate by a semiconductor manufacturing process.

In the embodiment of the present disclosure, the first diode pair 330 in the first loop generates the first voltage signal

$$\text{Vben} - \text{Vbe1} = \Delta V_{BE} = \frac{kT}{q}\ln(n) = K \cdot T$$

associated with the temperature $T$ of the sensing chip 302, and the second diode pair 360 in the second loop generates the second voltage signal Vben_c - Vbe1_c =

$$\Delta V_{BE\_C} = \frac{kT_C}{q}\ln(n) = K \cdot T_C$$

associated with the temperature $T_C$ of the measuring chip 304, where $k$ denotes Boltzmann's constant, q denotes electric charge of electron, and K denotes calibration coefficient. Therefore, the temperature difference calculation unit 370 calculates the temperature difference between two chips and expresses it as follows:

$$\Delta V_{BE} - \Delta V_{BE\_C} = \frac{k\ln(n)}{q}(T - T_C) = K \cdot \Delta T$$

.

Referring to FIG. 14A, there is shown a circuit diagram of the temperature difference measurement circuit in the first embodiment of the present disclosure. The temperature difference measurement circuit senses the temperature difference between two chips with a diode pair having a junction area ratio of 1:n and comprises a multiple current source in an aspect. As shown in the diagram, according to the present disclosure, a temperature measurement system 300 comprises a sensing chip 302 referred to as the first chip and a measuring chip 304 referred to as the second chip. The measuring chip 304 is electrically connected to the sensing chip 302 via two component nodes 231, 232 and a common node 233 to establish a first loop 340. The sensing chip 302 comprises a first diode pair 330 electrically connected to the two component nodes 231, 232 and the common node 233. The first diode pair 330 is configured for sensing the temperature of the sensing chip 302 and has a junction area ratio of 1:n. The measuring chip 304 comprises a second loop 350, a second diode pair 360, a first multiple current source 310 and a second multiple current source 320, wherein the second diode pair 360 is configured for sensing the temperature of the measuring chip 304 and has a junction area ratio of 1:n. The first multiple current source 310 and the second multiple current source 320 comprise two current sources and provide two outputs with equal current values I, respectively. Furthermore, the second diode pair 360 and the common node 233 have the same reference potential.

The first loop 340 is electrically connected to the first diode pair 330 of the sensing chip 302 and the first multiple current source 310 such that the first multiple current source 310 provides equal current values to the first diode pair 330 having a junction area ratio of 1:n for generating first voltage signals Vbe1, Vben associated with the temperature of the sensing chip 302. The second loop 350 is electrically connected to the second multiple current source 320 and the second diode pair 360, so that the second multiple current source 320 provide equal current values to the second diode pair 360 having a junction area ratio of 1:n for generating second voltage signals Vbe1_c, Vben_c associated with the temperature of the measuring chip 304. The temperature difference associated with the temperature of the sensing chip 302 and the temperature of the measuring chip 304 is calculated according to the first voltage signals Vbe1, Vben and the second voltage signals Vbe1_c, Vben_c.

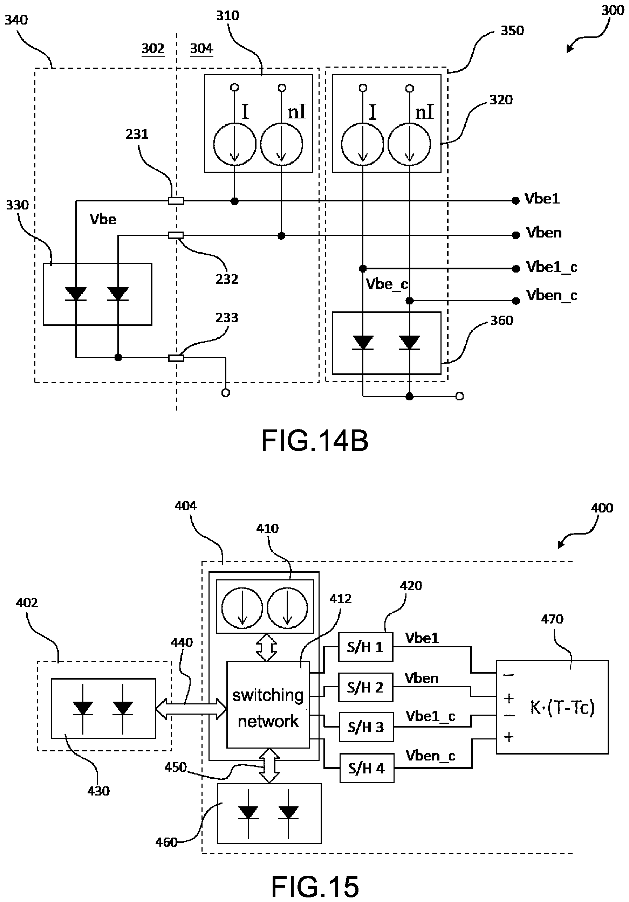

Referring to FIG. 14B, there is shown another circuit diagram of the temperature difference measurement circuit in the first embodiment of the present disclosure. The temperature difference measurement circuit senses the temperature difference between two chips with a diode pair having equal junction areas and comprises a multiple current source in another aspect. The present disclosure provides a temperature measurement system 300 that comprises a sensing chip 302 referred to as the first chip and a measuring chip 304 referred to as the second chip, wherein the measuring chip 304 is electrically connected to the sensing chip 302 through the two component nodes 231, 232 and the common node 233 to establish a first loop 340. The sensing chip 302 comprises a first diode pair 330 electrically connected to the two component nodes 231, 232 and the common node 233, the first diode pair 330 is configured for sensing the temperature of the sensing chip 302, and has a junction area ratio of 1:1, i.e. a junction area of one diode of the first diode pair 330 is equal to a junction area of another one diode of the first diode pair 330. The measuring chip 304 comprises a second loop 350, a second diode pair 360, a first multiple current source 310 and a second multiple current source 320, Wherein the second diode pair 360 is configured for sensing the temperature of the measuring chip 304, and has a junction area ratio of 1:1. The first multiple current source 310 and the second multiple current source 320 each comprise two current sources and provide two outputs with a current ratio of 1:n. Furthermore, the second diode pair 360 and the common node 233 have the same reference potential.

The first loop 340 is electrically connected to the first multiple current source 310 and the first diode pair 330 of the sensing chip 302 such that the first multiple current source 310 provides multiple currents with a current ratio of 1:n to the first diode pair 330 having equal junction areas for generating the first voltage signals Vbe1, Vben associated with the temperature of the sensing chip 302. The second loop 350 is electrically connected to the second multiple current source 320 and the second diode pair 360 such that the second multiple current source 320 provides multiple currents with a current ratio of 1:n to the second diode pair 360 with equal junction areas to generate the second voltage signals Vbe1_c, Vben_c associated with the temperature of the measuring chip 304. The difference between the temperature of the sensing chip 302 and the temperature of the measuring chip 304 is calculated according to the first voltage signals Vbe1, Vben and the second voltage signals Vbe1_c, Vben_c.

Accordingly, in the first embodiment of the present disclosure, the measuring chip is electrically connected to the sensing chip to establish a first loop. Based on a diode pair with a current ratio of 1:n and equal junction areas as shown in FIG. 14B or a diode pair with a junction area ratio of 1:n and equal current values as shown in FIG. 14A are provided at the first and second loops, the first and second loops generates the first voltage signals Vbe1, Vben associated with the temperature of the sensing chip 302 and the second voltage signals Vbe1_c, Vben_c associated with the temperature of the measuring chip 304, respectively, so as to calculate the difference between the temperature of the sensing chip 302 and the temperature of the measuring chip 304.

According to the present disclosure, a temperature measurement system 400 comprises a measuring chip 404 electrically connected to a sensing chip 402 to establish a first loop 440, wherein the sensing chip 402 is referred to as the first chip, the measuring chip 404 is referred to as the second chip. Regarding the temperature difference measurement circuit in the second embodiment of the present disclosure, as shown in FIG. 15, the measuring chip 404 comprises a switching network 412 electrically connected to a plurality of sample and hold circuits 420 (S/H circuits), a multiple current source 410 and a second loop 450, wherein the second loop 450 is electrically connected to at least one second diode or second diode pair 460, and the first loop 440 is electrically connected to at least one first diode of the sensing chip 402 or the first diode pair 430. The switching network 412 selectively switches according to a selection signal to provide the multiple current source 410 electrically connected to the first loop 440 and the second loop 450, so as to sample and retain the first voltage signals Vbe1, Vben and the second voltage signals Vbe1_c, Vben_c on the first loop 440 and the second loop 450, respectively. The difference between the temperature of the sensing chip 402 and the temperature of the measuring chip 404 is calculated with a temperature difference calculation unit 470 according to the voltage signals Vbe1, Vben, Vbe1_c, Vben_c. In the embodiment of the present disclosure, the first diode pair 430 of the sensing chip 402 is a first PN junction element formed on a semiconductor substrate by a semiconductor manufacturing process, and the second diode pair 460 of the measuring chip 404 is a second PN junction element formed on a semiconductor substrate by a semiconductor manufacturing process.

Likewise, in the embodiment of the present disclosure, when the switching network 412 selectively switches to allow the multiple current source 410 to be electrically connected to the first loop 440 and the second loop 450, the first diode 430 of the first loop samples and retains the first voltage signal Vben - Vbe1 = $\Delta V_{BE} = \frac{kT}{q}\ln(n) = K \cdot T$ associated with the temperature $T$ of the sensing chip 402. The second diode 460 of the second loop samples and retains the second voltage signal $Vben\_c - Vbe1\_c = \Delta V_{BE\_C} = \frac{kT_C}{q}\ln(n) = K \cdot T_C$ associated with the temperature $T_C$ of the measuring chip 404, where k denotes Boltzmann's constant, q denotes electricity of an electron, and K denotes calibration coefficient. Therefore, the temperature difference between two chips, as calculated with the tem-

$$\Delta V_{BE} - \Delta V_{BE\_C} = \frac{k \ln(n)}{q}(T - T_C) = K \cdot \Delta T.$$

perature difference calculation unit 470, is expressed by

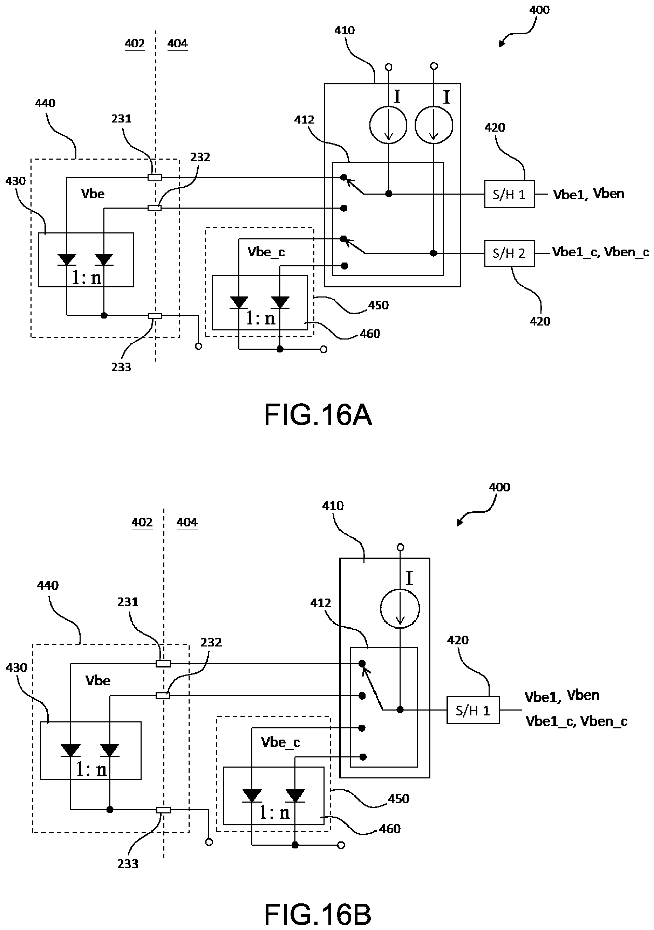

Referring to FIG. 16A, there is shown a circuit diagram of the temperature difference measurement circuit in the second embodiment of the present disclosure, wherein the temperature difference measurement circuit senses the temperature difference between two chips based on a diode pair having a junction area ratio of 1:n, and comprises a multiple current source in an aspect. According to the present disclosure, the temperature measurement system 400 comprises the sensing chip 402 referred to as the first chip and the measuring chip 404 referred to as the second chip, wherein the measuring chip 404 is electrically connected to the sensing chip 402 through the two component nodes 231, 232 and the common node 233 to establish a first loop 440. The sensing chip 402 comprises a first diode pair 430 electrically connected to the two component nodes 231, 232 and the common node 233. The first diode pair 430 is configured for sensing the temperature of the sensing chip 402 and has a junction area ratio of 1:n. The measuring chip 404 comprises a second loop 450, a second diode pair 460, and a multiple current source 410 having the switching network 412, wherein the second diode pair 460 is configured for sensing the temperature of the measuring chip 404 and has a junction area ratio of 1:n. The multiple current source 410 comprises two current sources I and the switching network 412 and selectively switches to provide the equal current values I to the four outputs. Furthermore, the second diode pair 460 and the common node 233 have the same reference potential.

Referring to FIG. 16A, when the switching network 412 selectively switches according to a selection signal to allow two outputs of the multiple current source 410 to electrically connect to the first loop 440 and the second loop 450, respectively, the first loop 440 is electrically connected to one of the outputs of the multiple current source 410 and one of the diodes of the first diode pair 430 of the sensing chip 402, whereas the second loop 450 is electrically connected to the other output of the multiple current source 410 and one of the diodes of the second diode pair 460 of the measuring chip 404 so that the multiple current source 410 provides equal current values to one of the diodes of the first and second diode pairs 430, 460. The sample and hold circuits 420 sample and retain the first and second voltage signals Vbe1, Vbe1_c associated with the temperature of the sensing chip 402 and the temperature of the measuring chip 404 according to the selection signal.

When the switching network 412 selectively switches according to a selection signal to allow two other outputs of the multiple current source 410 to electrically connect to the first loop 440 and the second loop 450, respectively, the first loop 440 is electrically connected to one of the outputs of the multiple current source 410 and the other diode of the first diode pair 430 of the sensing chip 402, whereas the second loop 450 is electrically connected to the other output of the multiple current source 410 and the other diode of the second diode pair 460 of the measuring chip 404 so that the multiple current source 410 provides equal current values to the other diodes of the first and second diode pairs 430, 460. The sample and hold circuits 420 sample and retain the first and second voltage signals Vben, Vben_c associated with the temperature of the sensing chip 402 and the temperature of the measuring chip 404 according to the selection signal. Therefore, the multiple current source 410 switches twice to be electrically connected to the first loop 440 and the second loop 450 and undergoes sampling and retention twice to obtain the first voltage signals Vbe1, Vben and the second voltage signals Vbe1_c, Vben_c, so as to calculate the difference associated with the temperature of the sensing chip 402 and the temperature of the measuring chip 404.

Referring to FIG. 16B, there is shown another circuit diagram of the temperature difference measurement circuit in the second embodiment of the present disclosure. The temperature difference measurement circuit senses the temperature difference between two chips with a diode pair having a junction area ratio of 1:n and comprises a multiple current source in another aspect. The temperature difference measurement circuit shown in FIG. 16B is distinguished from the temperature difference measurement circuit shown in FIG. 16A by the technical features of the multiple current source 410 and the required number of the sample and hold circuits 420. The remaining portion is the same as the temperature difference measurement circuit shown in FIG. 16A. Referring to FIG. 16B, the multiple current source 410 comprises a current source I and a switching network 412 and selectively switches to provide equal current values I to four outputs. Therefore, the multiple current source 410 switches four times to be electrically connected to the first loop 440 and the second loop 450 and is processed by the sample and hold circuit 420 to undergo sampling and retention four times so as to obtain the first voltage signals Vbe1, Vben and the second voltage signals Vbe1_c, Vben_c, and thereby calculate the difference associated with the temperature of the sensing chip 402 and the temperature of the measuring chip 404.

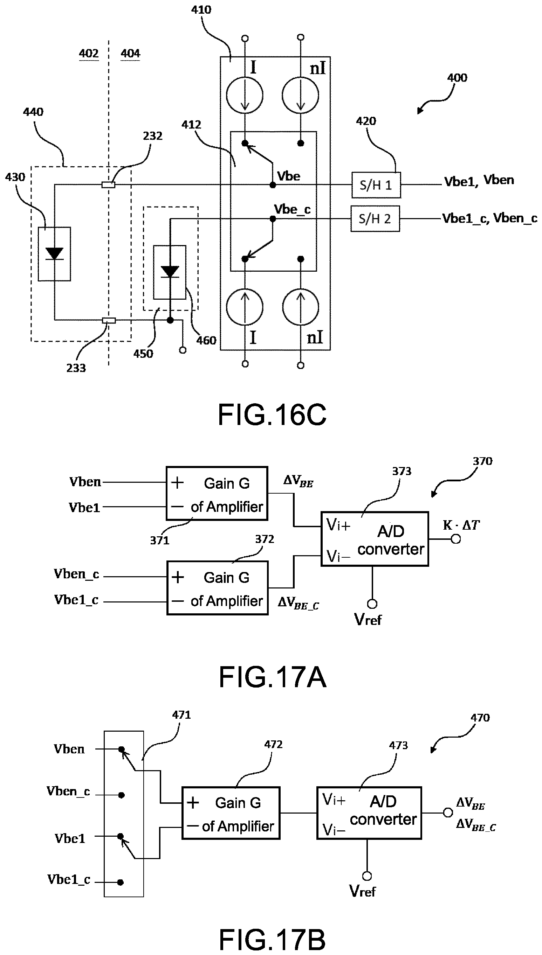

FIG. 16C is yet another circuit diagram of the temperature difference measurement circuit in the second embodiment of the present disclosure, wherein the temperature difference measurement circuit senses the temperature difference between two chips with one single diode and comprises a multiple current source in yet another aspect. The present disclosure provides a temperature measurement system 400 comprising a sensing chip 402 referred to as the first chip and a measuring chip 404 referred to as the second chip. The measuring chip 404 is electrically connected to the sensing chip 402 through the component nodes 232 and the common node 233 to establish a first loop 440. The sensing chip 402 comprises a first diode 430 electrically connected to the component nodes 232 and the common node 233. The first diode 430 is used for sensing the temperature of the sensing chip 402. The measuring chip 404 comprises a second loop 450, a second diode 460 and a multiple current source 410 having a switching network 412, wherein the second diode 460 is used for sensing the temperature of the measuring chip 404. The multiple current source 410 has two current sources for providing multiple currents with a current ratio of 1:n, comprises two current sources I, two current sources nI and a switching network 412, and selectively switches to provide equal current values I or nI to two outputs. Furthermore, the second diode 460 and the common node 233 have the same reference potential.

As shown in FIG. 16C, when the switching network 412 selectively switches to allow two current sources I of the multiple current source 410 to be electrically connected to the first loop 440 and the second loop 450, respectively, the first loop 440 is electrically connected to one of the current sources I of the multiple current source 410 and the first diode 430 of the sensing chip 402, and the second loop 450 is electrically connected to the other current source I of the multiple current source 410 and the second diode 460 of the measuring chip 404; thus, the multiple current source 410 provides equal current values I to the first and second diodes 430, 460, and the sample and hold circuits 420 sample and retain the first and second voltage signals Vbe1, Vbe1_c associated with the temperature of the sensing chip 402 and the temperature of the measuring chip 404.

When the switching network 412 selectively switches to allow two current sources nI of the multiple current source 410 to be electrically connected to the first loop 440 and the second loop 450, respectively, the first loop 440 is electrically connected to one of the current sources nI of the multiple current source 410 and the first diode 430 of the sensing chip 402, and the second loop 450 is electrically connected to the other current source nI of the multiple current source 410 and the second diode 460 of the measuring chip 404, so that the multiple current source 410 provides equal current values nI to the first and second diodes 430, 460, and the sample and hold circuits 420 sample and retain the first and second voltage signals Vben, Vben_c associated with the temperature of the sensing chip 402 and the temperature of the measuring chip 404. Therefore, the multiple current source 410 switches twice to be electrically connected to the first loop 440 and the second loop 450 and undergoes sampling and retention twice so as to obtain the first voltage signals Vbe1, Vben and the second voltage signals Vbe1_c, Vben_c, and thereby calculate the difference between the temperature of the sensing chip 402 and the temperature of the measuring chip 404.

Therefore, in the second embodiment of the present disclosure, the measuring chip is electrically connected to the sensing chip to establish a first loop. Based on the first and second loops switch selectively to provide multiple currents with a current ratio of 1:n to the diode pairs 430, 460 having equal junction areas, respectively as shown in FIG. 16C or switch selectively to provide equal current values to the diode pairs 430, 460 having a junction area ratio of 1:n as shown in FIG. 16A and FIG. 16B, so that the first and second loops 440, 450 sample and retain the first voltage signals Vbe1, Vben associated with the temperature of the sensing chip 302, respectively, and sample and retain the two voltage signals Vbe1_c, Vben_c associated with the temperature of the measuring chip 304, respectively, and thereby calculate the difference between the temperature of the sensing chip 302 and the temperature of the measuring chip 304.

Referring to FIG. 17A, there is shown a block diagram of temperature difference calculation blocks of the temperature difference measurement circuit in the first embodiment of the present disclosure. In the first embodiment of the present disclosure, a temperature difference measurement circuit 300 shown in FIG. 13 measures and generates the first and second voltage signals Vbe1, Vben, Vbe1_c, Vben_c at the first and second loops 340, 350, respectively, and inputs the voltage signals to the temperature difference calculation unit 370. The temperature difference calculation unit 370 comprises two amplifiers 371, 372 and an A/D converter 373. The amplifier 371 receives and differentially amplifies the first voltage signals Vbe1, Vben to generate the voltage $\Delta V_{BE}$ = Vben - Vbe1 associated with the temperature of the sensing chip 302. The amplifier 372 receives and differentially amplifies the second voltage signals Vbe1_c, Vben_c to generate the voltage $\Delta V_{BE\_C}$ = Vben_c - Vbe1_c associated with the temperature of the measuring chip 304. Then, the A/D converter 373 calculates the voltage difference $\Delta V_{BE}$ - $\Delta V_{BE\_C}$ to obtain the difference K' · $\Delta T$ associated with the temperature of the sensing chip 302 and the temperature of the measuring chip 304, where K' denotes a calibration coefficient for use in increasing the gain G of the amplifiers to enhance measurement accuracy. Likewise, the temperature difference calculation unit 470 of the temperature difference measurement circuit 400 in the second embodiment of the present disclosure can be implemented in accordance with the block diagram of FIG. 17A.

Referring to FIG. 17B, there is shown another block diagram of temperature difference calculation blocks of the temperature difference measurement circuit in the second embodiment of the present disclosure. In the second embodiment of the present disclosure, as shown in FIG. 15, the temperature difference measurement circuit 400 samples and retains the first and second voltage signals Vbe1, Vben, Vbe1_c, Vben_c at the first and second loops 440, 450, respectively, and inputs the voltage signals to the temperature difference calculation unit 470. The temperature difference calculation unit 470 comprises a switching network 471, an amplifier 472 and an A/D converter 473. The switching network 471 switches the first voltage signals Vbe1, Vben to the amplifier 472 to undergo differential amplification and then to the A/D converter 473 to undergo conversion so as to generate the digital signal $\Delta V_{BE}$ = Vben - Vbe1 associated with the temperature of the sensing chip 402. The switching network 471 switches the second voltage signals Vbe1_c, Vben_c to the amplifier 472 to undergo differential amplification and then to the A/D converter 473 to undergo conversion so as to generate the digital signal $\Delta V_{BE\_C}$ = Vben_c - Vbel_c associated with the temperature of the measuring chip 404. Then, the digital signals $\Delta V_{BE}$, $\Delta V_{BE\_C}$ are received by an MCU. Next, the difference between the temperature of the sensing chip 402 and the temperature of the measuring chip 404 is calculated. Likewise, the temperature difference calculation unit 370 of the temperature difference measurement circuit 300 in the first embodiment of the present disclosure can be implemented in accordance with the block diagram of FIG. 17B.

Referring to FIG. 13 and FIG. 15, the present disclosure provides a temperature measurement system comprising: a first chip (i.e., the sensing chip) comprising at least one first PN junction element, the first PN junction element is configured for sensing the temperature of the first chip; and a second chip (i.e., the measuring chip) electrically connected to the first chip to establish a first loop comprising the first PN junction element, the second chip comprises a second loop comprising at least one second PN junction element, the second PN junction is configured for sensing the temperature of the second chip; at least one electric power circuit for providing an electrical energy to the first loop and the second loop so as to generate a plurality of first voltage signals associated with the first PN junction element and generate a plurality of second voltage signals associated with the second PN junction element; and a calculation unit for calculating the temperature difference between the first chip and the second chip according to a plurality of first voltage signals of the first PN junction element and a plurality of second voltage signals of the second PN junction element.

In an embodiment of the present disclosure, at least one electric power circuit of the second chip provides an electrical energy with an electrical energy ratio of 1:n in the first loop and the second loop, generates a plurality of first and second voltage signals associated with the temperature of the first chip and the temperature of the second chip corresponding to the first PN junction element and the second PN junction element, and calculates the temperature difference between the first chip and the second chip according to the plurality of first and second voltage signals. In another embodiment of the present disclosure, the first chip comprises a pair of first PN junction elements. The pair of first PN junction elements have a junction area ratio of 1:n. The second chip comprises a pair of second PN junction elements. The pair of second PN junction elements have a junction area ratio of 1:n. At least one electric power circuit of the second chip provides, in the first loop and the second loop, equal electrical energy to the pair of first PN junction elements and the pair of second PN junction elements to generate a plurality of first and second voltage signals corresponding to the first PN junction element and the second PN junction element and associated with the temperature of the first chip and the temperature of the second chip, so as to calculate the temperature difference between the first chip and the second chip.

Referring to FIG. 13 and FIG. 15, the present disclosure provides a temperature measurement method comprising the steps of: electrically connecting a first chip (i.e., the sensing chip) and a second chip (i.e., the measuring chip) to establish a first loop, wherein the first chip comprises at least one first PN junction element in the first loop, and the first PN junction element is used for sensing the temperature of the first chip; providing a second loop at the second chip, wherein the second chip comprises at least one second PN junction element in the second loop, and the second PN junction element is used for sensing the temperature of the second chip; providing at the second chip an electrical energy to the first loop and the second loop so as to generate a plurality of first voltage signals associated with the first PN junction element and generate a plurality of second voltage signals associated with the second PN junction element; and calculating the temperature difference between the first chip and the second chip according to the plurality of first voltage signals of the first PN junction element and the second PN junction element.

In the first embodiment of the present disclosure, the temperature measurement method further comprises the steps of: providing multiple currents at the second chip to flow through the first loop for providing an electrical energy to the first loop, to generate a plurality of first voltage signals associated with the first PN junction element; and providing multiple currents at the second chip to flow through the second loop for providing an electrical energy to the second loop, to generate the plurality of second voltage signals associated with the second PN junction element. In the second embodiment of the present disclosure, the second chip further comprises a switching network for selectively switching multiple currents to the first loop and the second loop according to a selection signal for providing an electrical energy required for generating the plurality of first voltage signals associated with the first PN junction element and generating the plurality of second voltage signals associated with the second PN junction element and for sampling and retaining the plurality of first voltage signals and the plurality of second voltage signals according to the selection signal.

Furthermore, according to FIG. 13 and FIG. 15, the present disclosure provides a method of manufacturing a measuring chip, comprising the steps of: forming at least one component node and a common node on a semiconductor substrate by a semiconductor manufacturing process, wherein the component node and the common node are used for electrically connecting to at least one first PN junction element of a sensing chip; forming at least one second PN junction element on the semiconductor substrate by the semiconductor manufacturing process; and forming at least one electric power circuit on the semiconductor substrate by the semiconductor manufacturing process, wherein the at least one electric power circuit is used for providing an electrical energy to the second PN junction element and to, via the component node and the common node, the first PN junction element to generate the plurality of first voltage signals associated with the first PN junction element and generate the plurality of second voltage signals associated with the second PN junction element, wherein the plurality of first voltage signals of the first PN junction element and the plurality of second voltage signals of the second PN junction element are used for calculating and obtaining the temperature difference between the sensing chip and the semiconductor substrate.

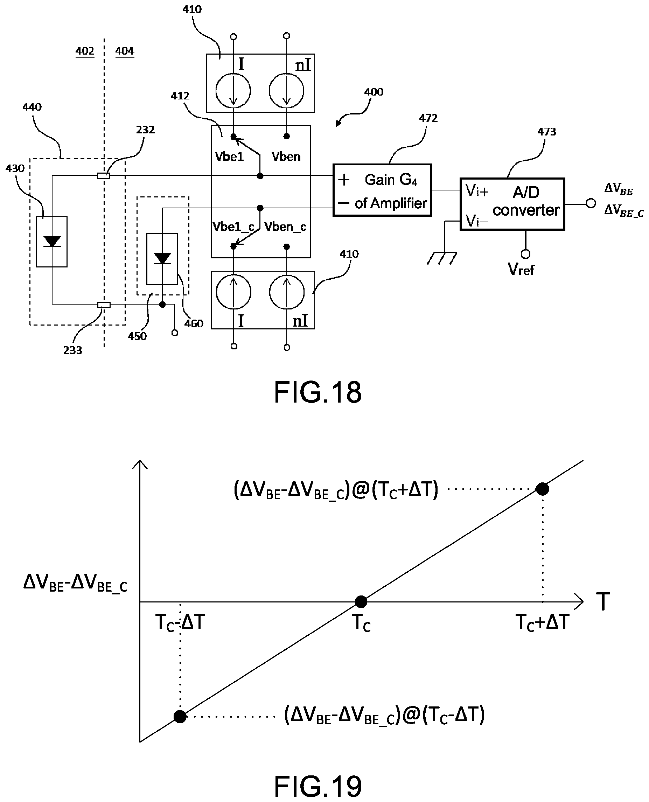

Referring to FIG. 18, there is shown a block diagram of temperature difference calculation blocks shown in FIG.

17C and electrically connected to the temperature difference measurement circuit shown in FIG. 16C. In the embodiment of the present disclosure, the measuring chip 404 is electrically connected to the sensing chip 402 through the component nodes 232 and the common node 233 to establish a first loop 440, and the first loop 440 comprises the first diode 430 of the sensing chip 402. The measuring chip 404 comprises a second loop 450 electrically connected to a built-in second diode 460. The N-terminal of the first diode 430 and the N-terminal of the built-in second diode 460 of the measuring chip 404 are electrically connected to the common node 233. The common node 233 is connected to a reference voltage. The measuring chip 404 selectively switches according to a selection signal to provide current ratio with an electrical energy ratio 1:n to the first loop 440 so as to generate a plurality of first voltage signals Vbe1, Vben associated with the temperature of the sensing chip 402. Meanwhile, the measuring chip 404 selectively switches for providing multiple currents with a current ratio of 1:n to the second loop 450 according to the selection signal, so as to generate a plurality of second voltage signals Vbe1_c, Vben_c associated with the temperature of the measuring chip 404. The multiple currents with a current ratio of 1:n include a current source I and a current source nI.

The two input terminals of the amplifier 472 with gain $G_4$ have the built-in sample and hold circuits 420 shown in FIG. 16C. One of the input terminals of the amplifier 472 receives the plurality of first voltage signals Vbe1, Vben. The other input terminal receives the plurality of second voltage signals Vbe1_c, Vben_c. The temperature difference measurement circuit shown in FIG. 18 has to undergo the measurement operation twice. The first measurement operation carried out according to the selection signal involves switching the first loop 440 and second loop 450 to the current source I, so that the input voltage of the amplifier 472 receives $V_{be1} - V_{be1\_C}$ and the A/D converter 473 receives output voltage from the amplifier 472 and transmit the converted value to an MCU. The second measurement operation carried out according to the selection signal involves switching the first loop 440 and second loop 450 to the current source nI, so that the input voltage of the amplifier 472 receives $V_{ben} - V_{ben\_C}$, and the A/D converter 473 receives output voltage from the amplifier 472 and transmits the converted value to the MCU. The MCU subtracts the A/D converted values obtained in the two measurement operations, and the result is proportional to $\Delta V_{BE} - \Delta V_{BE\_C}$, which is equivalent to being proportional to $T - T_C$, so as to obtain the difference between the temperature $T$ of the sensing chip 402 and the temperature $T_C$ of the measuring chip 404. According to the present disclosure, the input terminal signals of the amplifier 472 are diminished and the gain $G_4$ of the amplifier can be increased, so as to narrow down the temperature measurement range and enhance measurement accuracy. For example, to adjust the gain of the amplifier to achieve a dynamic measured temperature range with a deviation of $\pm\Delta T$, and thus the temperature measurement range is expressed as $T_C - \Delta T \sim T_C + \Delta T$, as indicated by the temperature measurement range depicted in the schematic view of FIG. 19.

The measurement range depicted in the circuit block diagram of FIG. 18 is flexible by adjusting the amplification ratio $G_4$ for different measurement ranges, so as to achieve the required temperature range. Furthermore, it is easy for the diode 430 or first PN junction element to be integrated together with the silicon transducer (exemplified by a thermopile device) onto a sensing chip 402. The diode 430 senses the ambient temperature of the thermopile device and is used for sensing the temperature difference between the sensing chip 402 and the measuring chip 404. According to the present disclosure, the temperature difference measurement circuit can achieve an accuracy allowance of 0.01°, and the mathematical expression for the measurement of $\Delta V_{BE} - \Delta V_{BE\_C}$ with the A/D converter is as follows:

$$\text{ADC}_n = \frac{(V_{ben} - V_{ben\_C}) \cdot G_4}{V_{ref}}, \quad \text{ADC}_1 = \frac{(V_{be1} - V_{be1\_C}) \cdot G_4}{V_{ref}}$$

$$\Delta \text{ADC} = \text{ADC}_n - \text{ADC}_1 = \frac{\left[(V_{ben} - V_{be1}) - (V_{ben\_C} - V_{be1\_C})\right] \cdot G_4}{V_{ref}}$$

$$= \frac{\left(\Delta V_{BE} - \Delta V_{BE\_C}\right) \cdot G_4}{V_{ref}} = K_{cal4} \cdot (T - T_C)$$

where

$$V_{ben} - V_{be1} = \Delta V_{BE} = \frac{kT}{q} \ln(n), \quad T \propto \Delta V_{BE}$$

$$V_{ben\_C} - V_{be1\_C} = \Delta V_{BE\_C} = \frac{kT_C}{q} \ln(n), \quad T_C \propto \Delta V_{BE\_C}$$

where $k$ denotes Boltzmann's constant, $q$ denotes electric charge of electron, $G_4$ denotes amplification ratio (10-200), $V_{ref}$

denotes ADC reference voltage, $T$ denotes the temperature of the sensing chip, $T_C$ denotes the temperature of the measuring chip, and $K_{cal4}$ denotes calibration coefficient.

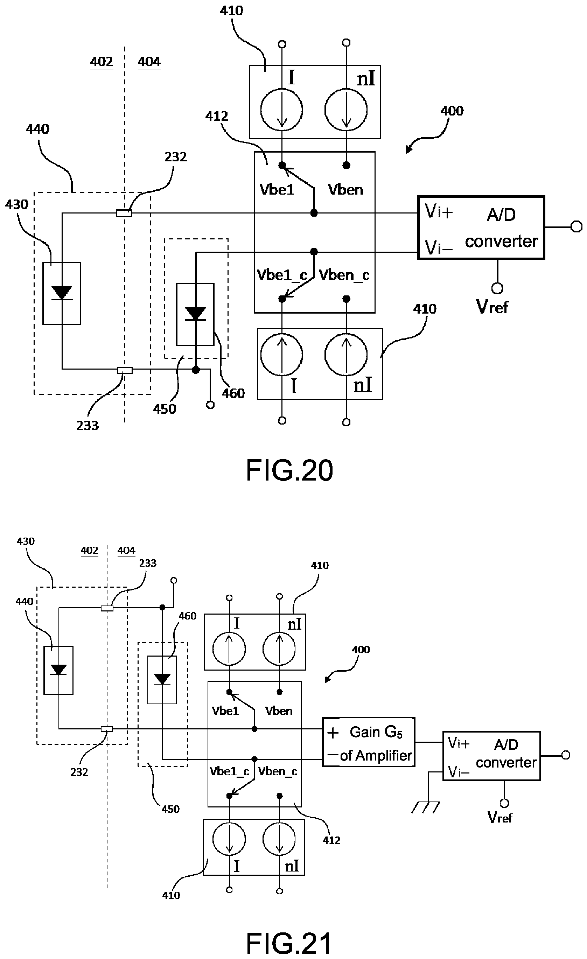

Referring to FIG. 20 and FIG. 21, there are shown an equivalent circuit diagram and another equivalent circuit diagram of the temperature difference measurement circuit shown in FIG. 18, respectively. In the equivalent circuit of the temperature difference measurement circuit shown in FIG. 20, currents I, nI (i.e., an electric power ratio of 1:n) selectively flow through the P-terminal of the first diode 430 and the P-terminal of the second diode 460, respectively, whereas the N-terminal of the first diode 430 and the N-terminal of the second diode 460 are connected electrically and connected to a reference voltage. Furthermore, a built-in sample and hold circuit is provided at the two input terminals of the A/D converter to sample and retain the first and second voltage signals. In the other equivalent circuit of the temperature difference measurement circuit shown in FIG. 21, the P-terminal of the first diode 430 and the P-terminal of the second diode 460 are connected electrically and connected to a reference voltage, whereas currents I, nI (i.e., an electric power ratio of 1:n) selectively flow through the N-terminal of the first diode 430 and the N-terminal of the second diode 460, respectively. Furthermore, the two input terminals of the amplifier can built-in a sample and hold circuit, so as to sample and retain the first and second voltage signals. Thus, the circuits shown in FIG. 20 and FIG. 21 are equivalent circuits capable of performing the same function and measuring $\Delta V_{BE}$, $\Delta V_{BE\_C}$.

When it comes to equivalent circuits of diodes, a conventional semiconductor manufacturing process usually entails manufacturing a diode equivalent circuit with a P terminal - N terminal junction (P-N junction) of an element circuit. For instance, a diode exists between the base and the emitter of a transistor in a BJT (bipolar junction transistor) circuit used in a semiconductor manufacturing process. The equivalent circuit of a diode can be manufactured with a transistor circuit; for example, the bases of an NPN transistor and a PNP transistor serve as the common node of two diodes, whereas the emitter and the collector serve as the other nodes of the two diodes, respectively. Likewise, the equivalent circuit of a diode can be manufactured with P-N junction elements in the other components and circuits in a semiconductor manufacturing process.

Therefore, regarding the sensing chip, measuring chip and temperature measurement system of the present disclosure, the diodes arranged at the sensing chip and measuring chip measure the temperature difference between two chips, respectively. A temperature difference of 30°C and an accuracy allowance of 0.01°C only require 3000 count stability resolution, corresponding to A/D converter specification of 12-bit stability, which is easier for general A/D converters to achieve, and the requirements for signal noise suppression are also lenient. The present disclosure is effective in implementing high-accuracy temperature difference measurement circuits; by contrast, conventional temperature measurement circuits directly measure an external diode in order to calculate a target temperature and thus disadvantageously end up with overly wide temperature range and low accuracy. According to the present disclosure, the temperature difference measurement circuit of the temperature measurement system measures the temperature difference between the diodes arranged at two chips, so as to attain a better accuracy. According to the present disclosure, since the temperature difference measurement circuit is characterized by small measurement input signals, and thus the measurement errors generated from external diode characteristic differences are small. A built-in diode of the measuring chip can be accurately calibrated during the stage of chip production to greatly enhance the accuracy of measurement results. The measurement of external diodes by conventional driving chips requires extra calibration for the measured target temperature with the external diodes after integration to a system production; as a result, the prior art makes it difficult to carry out mass production. By contrast, the temperature difference measurement circuit, method and system of the present disclosure allows a measuring chip to carry out temperature difference measurement with an external diode but without performing any additional system calibration, so as to solve the conventional problems with mass production and enhance the accuracy of measurement results.

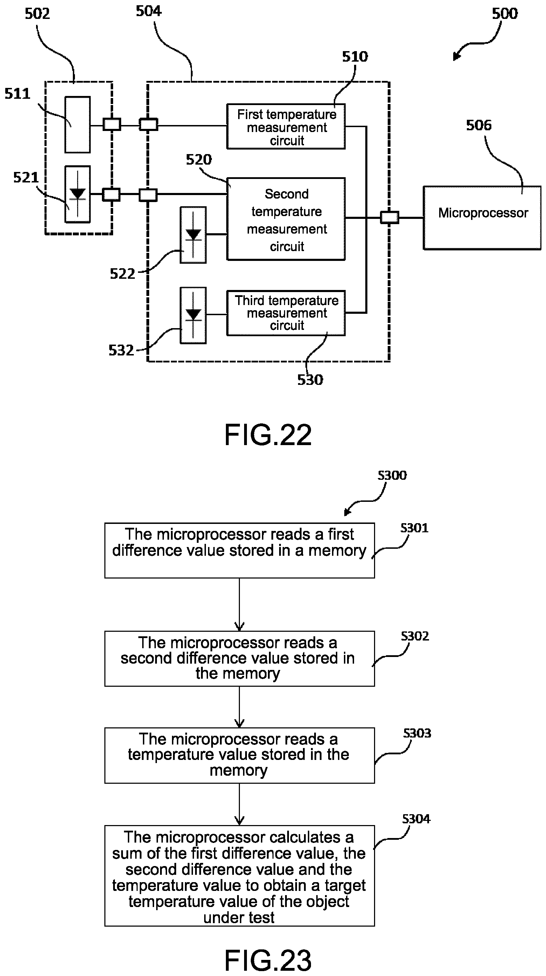

Referring to FIG. 22, there is shown a block diagram of the temperature measurement system of the present disclosure. In an embodiment of the present invention, a temperature measurement system 500 implemented by an ear thermometer is configured for measuring a user's body temperature. The temperature measurement system 500 comprises a sensing chip 502 referred to as the first chip, a measuring chip 504 referred to as the second chip, and a microprocessor 506, wherein the sensing chip 502 is electrically connected to the measuring chip 504 and comprises a thermopile device 511 and at least one first diode 521, the thermopile device 511 and the first diode 521 are integrated into a semiconductor substrate by a semiconductor manufacturing process. The measuring chip 504 is electrically connected to the microprocessor 506 and comprises a first temperature measurement circuit 510, a second temperature measurement circuit 520 and a third temperature measurement circuit 530.

The first temperature measurement circuit 510 is a target temperature measurement circuit electrically connected to the thermopile device 511, so as to measure a voltage signal outputted from the thermopile device 511, wherein the voltage signal denotes the difference between target temperature Ta of an object under test and ambient temperature Tb of the thermopile device 511. The second temperature measurement circuit 520 is a temperature difference measurement circuit electrically connected to an external heat sensor and at least one second diode 522 inside the measuring chip 504, as shown in FIG. 13 through FIG. 16C, for measuring the difference between the external heat sensor and temperature Tc of the measuring chip 504, wherein the external heat sensor is configured for sensing ambient temperature Tb of the thermopile device 511. The third temperature measurement circuit 530 is a temperature measurement circuit electrically connected to at least one third diode 532 of the measuring chip 504, as shown in FIG. 6, for measuring temperature Tc of the measuring chip 504. In a variant embodiment of the present disclosure, the external heat sensor is another self-contained diode component outside the package of the measuring chip 504. In another variant embodiment of the present disclosure, the external heat sensor is the first diode 521 inside the package of the sensing chip 502 outside the package of the measuring chip 504. In yet another variant embodiment of the present disclosure, the first diode 521 is inside the sensing chip 502 and outside the measuring chip 504, and the two chips 502, 504 are integrated to form one single component or integrated into the same package. The external heat sensor is exemplified by the first diode 521 of the sensing chip 502, and ambient temperature Tb of the thermopile device 511 is regarded as the temperature of the sensing chip 502.

Referring to FIG. 22, the microprocessor 506 is electrically connected to the first, second, and third temperature measurement circuits 510, 520, 530 to receive and store a first difference value (Ta-Tb), a second difference value (Tb-Tc) and a temperature value (Tc) in a memory, respectively, and thereby calculate the target temperature (Ta) of the object under test. Furthermore, the first diode 521 and the second diode 522 have the same configuration and are implemented in the form of one single diode, PN junction element, diode pair with a common node, or equivalent BJT transistor circuit.

Therefore, in the embodiment illustrated by FIG. 22, the present disclosure provides a temperature measurement system 500 comprising: at least one first PN junction element arranged at a first chip to sense the temperature Tb of the first chip, with the first chip integrating a silicon transducer and the at least one first PN junction element; at least one second PN junction element arranged at a second chip to sense the temperature Tc of the second chip; a first temperature measurement circuit 510 electrically connected to the silicon transducer to measure a first difference value (Ta-Tb) between the temperature Ta of an object under test and the temperature Tb of the first chip; a second temperature measurement circuit 520 electrically connected to the first PN junction element and the second PN junction element so as to measure a second difference value (Tb-Tc) between the temperature Tb of the first chip and the temperature Tc of the second chip; a third temperature measurement circuit 530 electrically connected to at least one third PN junction element of the second chip and arranged at the second chip, so as to measure the temperature Tc of the second chip; and a processing unit for calculating the first difference value (Ta-Tb), the second difference value (Tb-Tc) and the temperature value Tc of the second chip, so as to obtain a temperature value of the object under test.

The present disclosure further provides a temperature measurement method, comprising the steps of: providing at least one first PN junction element arranged at a first chip to sense the temperature of the first chip, with the first chip integrating a silicon transducer and the at least one first PN junction element; providing at least one second PN junction element arranged at a second chip to sense the temperature of the second chip; measuring the silicon transducer to obtain a first difference value between the temperature of an object under test and the temperature of the first chip; measuring the first PN junction element and the second PN junction element to obtain a second difference value between the temperature of the first chip and the temperature of the second chip; measuring a temperature value of the second chip; and calculating the first difference value, the second difference value and the temperature value of the second chip to obtain a temperature value of the object under test.

In the embodiment illustrated by FIG. 22, the present disclosure provides a sensing chip 502 comprising a silicon transducer and at least one first PN junction element, both being integrated onto a semiconductor substrate. The silicon transducer and the first PN junction element are used for electrically connecting to a measuring chip 504, so that the measuring chip 504 measures the difference (Ta-Tb) between the temperature Ta of an object under test and the temperature Tb of the semiconductor substrate through the silicon transducer, and the measuring chip 504 measures the difference (Tb-Tc) between the temperature Tb of the semiconductor substrate and the temperature Tc of the measuring chip through the first PN junction element. The present disclosure further provides a method of manufacturing a sensing chip 502, comprising the steps of: forming a silicon transducer on a semiconductor substrate by a semiconductor manufacturing process; and forming at least one PN junction element on the semiconductor substrate by the semiconductor manufacturing process, wherein, the first PN junction element is configured for electrically connecting to a measuring chip 504, so that the measuring chip 504 measures the difference between the temperature of the semiconductor substrate and the temperature of the measuring chip 504 through the first PN junction element.

Referring to FIG. 23, there is shown a schematic view of a process flow of a temperature calculation method S300 of the present disclosure, with the temperature calculation method S300 applicable to the microprocessor 506 shown in FIG. 22. The temperature calculation method S300 is applicable to the temperature measurement system 500 shown in FIG. 22 and comprises steps S301, S302, S303 and S304, all of which are executed by a plurality of program instructions of a computer program installed on the microprocessor 506. In step S301, the microprocessor 506 reads a first difference value stored in a memory (not shown). The first difference value is outputted from the first temperature measurement circuit 510 and is the difference between the temperature of an object under test and the temperature of a sensing chip 502. A silicon transducer of the sensing chip 502 senses the difference between the temperature of the object under test and the temperature of the sensing chip 502. In step S302, the microprocessor 506 reads a second difference value stored in the memory. The second difference value is outputted from the second temperature measurement circuit 520 and is the difference between the temperature of the sensing chip 502 and the temperature of a measuring chip 504. The measuring chip 504 is electrically connected to the sensing chip. In step S303, the microprocessor 506 reads a temperature value of the measuring chip 504, with the temperature value stored in the memory and outputted from the third temperature measurement circuit 530. In step S304, the microprocessor 506 calculates the sum of the first difference value, the second difference value and the temperature value to obtain a temperature value of the object under test.

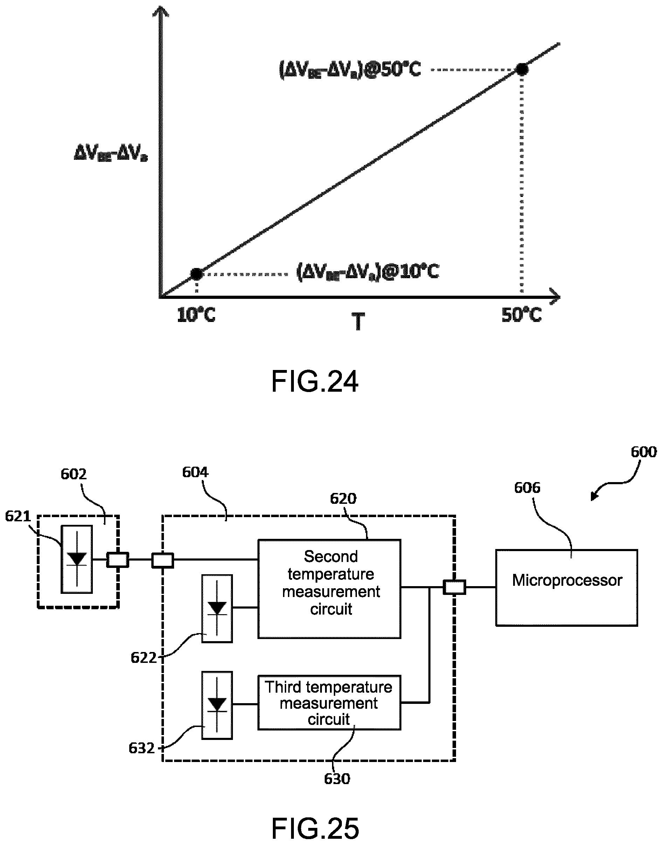

Referring to FIG. 24, there is shown a schematic view of the temperature measurement range of the temperature measurement system shown in FIG. 22. The temperature measurement system 500 shown in FIG. 22 uses the diodes 521, 522 arranged at the sensing chip 502 and the measuring chip 504 to function as heat sensors for measuring the temperature difference between two chips, respectively. A temperature difference of 30°C and an accuracy allowance of 0.01°C only require 3000 count stability resolution, corresponding to A/D converter specification of 12-bit stability, which is easier for general A/D converters to achieve, and the requirements for signal noise suppression are also lenient. The present disclosure is conducive to the achievement of the high-accuracy temperature difference measurement circuit. Conventional temperature measurement circuits directly measure a diode outside a driving chip 120, as shown in FIG. 2A, leading to an overly wide temperature range and low accuracy. By contrast, the present disclosure is advantageous in that the temperature difference measurement circuit measures the temperature difference between the diodes arranged at two chips, so as to attain enhanced accuracy.

According to the present disclosure, the input signal measured is smaller, the measurement error generated due to characteristic variation in the external diode also becomes smaller. The diode in the measurement chip 504 can be accurately calibrated in the production phase, hence significantly improving accuracy of the measurement results. The measurement of external diodes by conventional driving chips requires extra calibration for the measured target temperature with the external diodes after integration to a system product, which is difficult to carry out mass production. The present disclosure provides a temperature difference measurement circuit and method, enabling a measurement chip 540 to employ an external diode such that temperature difference measurement calibration can be performed without any additional system calibration. Thus, the problem in mass production and the pool accuracy in measurement result can be solved.

Referring to FIG. 25, there is shown a block diagram of a temperature measurement system 600 of the claimed invention. In an embodiment of the claimed invention, the temperature measurement system 600 is implemented in the form of a mobile phone and used for measuring a target temperature of an object under test, such as a lithium battery. According to the claimed invention, the temperature measurement system 600 comprises a sensing chip 602 referred to as the first chip, a measuring chip 604 referred to as the second chip, and a microprocessor 606, wherein the sensing chip 602 comprises at least one diode 621, which is used for sensing a target temperature. The sensing chip 602 is characterized in that at least one diode or a PN junction element is formed on a semiconductor substrate by a semiconductor manufacturing process. The measuring chip 604 measures the difference between a target temperature Ta (i.e., the temperature of the sensing chip 602) and the temperature Tc of the measuring chip 604 through the diode 621 of the sensing chip 602.

The measuring chip 604 comprises a second temperature measurement circuit 620 and a third temperature measurement circuit 630. The second temperature measurement circuit 620 is a temperature difference measurement circuit electrically connected to the diode 621 of the sensing chip 602 and the diode 622 of the measuring chip 604, as shown in FIG. 13 through FIG. 16C, and adapted to measure the difference (Ta-Tc) (referred to as a second difference value) between the temperature Ta of the sensing chip 602 and the temperature Tc of the measuring chip 604. The third temperature measurement circuit 630 is a temperature measurement circuit electrically connected to another diode 632 of the measuring chip 604, as shown in FIG. 6, for measuring the temperature Tc of the measuring chip 604. The microprocessor 606 is electrically connected to the second and third temperature measurement circuits 620, 630 for receiving and storing the second difference value (Ta-Tc) and the temperature value (Tc) in a memory (not shown), respectively, and thereby calculate the target temperature (Ta, that is, the temperature of the sensing chip 602).

In a variant embodiment of the claimed invention, the diode 621 of the sensing chip 602 and the diode 622 of the measuring chip 604 have the same configuration and are implemented in the form of one single diode, PN junction element, diode pair with a common node, or equivalent BJT transistor circuit. Furthermore, the sensing chip 602 is another self-contained diode component outside the package of the measuring chip 604. Alternatively, the diode 621 is arranged inside the package of the sensing chip 602 outside the package of the measuring chip 604. Alternatively, the diode 621 is inside the sensing chip 602 outside the measuring chip 604. The two chips 602, 604 are integrated to form one single component or integrated into the same package.

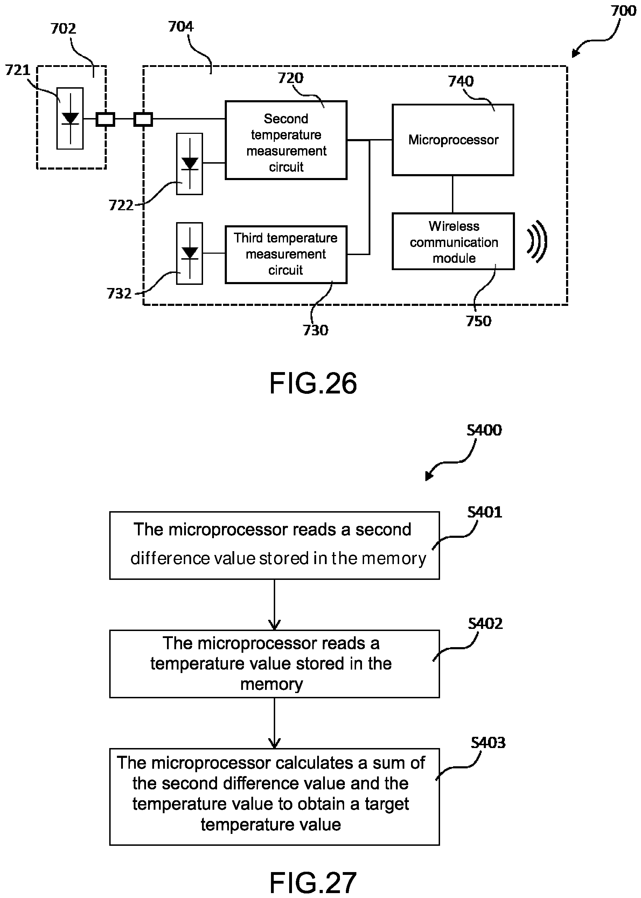

Referring to FIG. 26, there is shown a block diagram of a temperature measurement system 700 of the claimed invention. In an embodiment of the claimed invention, the temperature measurement system 700 is applicable to the Internet of things (IoT), so as to measure a target temperature. In the embodiment of the present invention, the temperature measurement system 700 comprises a sensing chip 702 referred to as the first chip and a measuring chip 704 referred to as the second chip. The sensing chip 702 comprises at least one diode 721 for sensing a target temperature. The sensing chip 702 comprises at least one diode or a PN junction element formed on a semiconductor substrate by a semiconductor manufacturing process. The measuring chip 704 is capable of performing wireless transmission and measuring the difference between a target temperature Ta (i.e., the temperature of the sensing chip 702) and the temperature Tc of the measuring chip 704 through the diode 721 of the sensing chip 702. Furthermore, the measuring chip 704 measures the temperature Tc thereof to calculate the target temperature Ta and wirelessly transmits the target temperature Ta to a central control system. The sensing chip 702 in the embodiment illustrated by FIG. 26 is identical to the sensing chip 602 in the embodiment illustrated by FIG. 25.

The measuring chip 704 comprises a second temperature measurement circuit 720, a third temperature measurement circuit 730, a microprocessor 740 and a wireless communication module 750. The second temperature measurement circuit 720 is a temperature difference measurement circuit electrically connected to the diode 721 of the sensing chip 702 and the diode 722 of the measuring chip 704, as shown in FIG. 13 through FIG. 16C, for measuring the difference (Ta-Tc), i.e., a second difference value, between the temperature Ta of the sensing chip 702 and the temperature Tc of the measuring chip 704. The third temperature measurement circuit 730 is a temperature measurement circuit electrically connected to another diode 732 of the measuring chip 704, as shown in FIG. 6, for measuring the temperature Tc of the measuring chip 704. The microprocessor 740 is electrically connected to the second and third temperature measurement circuits 720, 730 to receive and store the second difference value (Ta-Tc) and the temperature value (Tc) in a memory (not shown), respectively, and thereby calculate the target temperature (Ta, i.e., the temperature of the sensing chip 702). The microprocessor 740 controls the wireless communication module 750 to wirelessly transmit the target temperature Ta to a central control system.

In a variant embodiment of the claimed invention, the diode 721 of the sensing chip 702 and the diode 722 of the measuring chip 704 have the same configuration and are implemented in the form of one single diode, PN junction element, diode pair having a common node, or equivalent BJT transistor circuit. Furthermore, the sensing chip 702 is another self-contained diode component outside the package of the measuring chip 704. Alternatively, the diode 721 is arranged inside the package of the sensing chip 702 outside the package of the measuring chip 704. Alternatively, the diode 721 is inside the sensing chip 702 outside the measuring chip 704. The two chips 702, 704 are integrated to form one single component or integrated into the same package.

Therefore, in the embodiment illustrated by FIG. 25 and FIG. 27, the claimed invention provides a temperature measurement system comprising: at least one first PN junction element arranged at a first chip to sense the temperature of the first chip; at least one second PN junction element arranged at a second chip to sense the temperature of the second chip; a second temperature measurement circuit electrically connected to the first PN junction element and the second PN junction element and arranged at the second chip to measure and obtain a second difference value between the temperature of the first chip and the temperature of the second chip; a third temperature measurement circuit comprising at least one third PN junction element and arranged at the second chip to measure and obtain a temperature value of the second chip; and a microprocessor for calculating the second difference value and the temperature value of the second chip, so as to obtain a temperature value of the first chip. In the embodiment illustrated by FIG. 26, the temperature measurement system further comprises a wireless communication module controlled by the microprocessor to wirelessly transmit the temperature value of the first chip.

In the embodiment illustrated by FIG. 25 and FIG. 26, the claimed invention provides a temperature measurement method comprising the steps of: providing at least one first PN junction element arranged at a first chip to sense the temperature of the first chip; providing at least one second PN junction element arranged at a second chip to sense the temperature of the second chip; measuring the first PN junction element and the second PN junction element, so as to obtain a second difference value between the temperature of the first chip and the temperature of the second chip; measuring a temperature value of the second chip; and calculating the sum of the second difference value and the temperature value of the second chip, so as to obtain a temperature value of the first chip. In the embodiment illustrated by FIG. 26, the temperature measurement method of the claimed invention further comprises the step of transmitting wirelessly data about the temperature of the first chip.

In the embodiment illustrated by FIG. 25 and FIG. 26, the claimed invention provides a sensing chip comprising at least one PN junction element arranged on a semiconductor substrate. The PN junction element is used for electrically connecting to a measuring chip, so that the measuring chip measures the difference between the temperature of the sensing chip and the temperature of the measuring chip through the PN junction element. The claimed invention further provides a method of manufacturing a sensing chip, comprising the steps of: forming at least one PN junction element on a semiconductor substrate by a semiconductor manufacturing process; and electrically connecting the PN junction element to a measuring chip, so that the measuring chip measures the difference between the temperature of the sensing chip and the temperature of the measuring chip through the PN junction element.

Referring to FIG. 27, there is shown a schematic view of a process flow of a temperature calculation method S400 of the claimed invention, wherein the temperature calculation method S400 is implemented to the temperature measurement system shown in FIG. 25 and FIG. 26. The temperature calculation method S400 comprises steps S401, S402 and S403, all of which are executed by a plurality of program instructions of a computer program installed on the microprocessor. In step S401, the microprocessor reads a second difference value stored in a memory (not shown), outputted from the second temperature measurement circuit, and being the difference between the temperature of a sensing chip and the temperature of a measuring chip. In step S402, the microprocessor reads a temperature value stored in the memory, outputted from the third temperature measurement circuit, and being the temperature of the measuring chip. In step S403, the microprocessor calculates the sum of the second difference value and the temperature value, so as to obtain a temperature value of the sensing chip.

Therefore, a sensing chip, measuring chip and temperature measurement system of the claimed invention can achieve sensing a target temperature by diodes, so as to attain a linear relation between a measurement result and the target temperature by a means of measuring a temperature difference, and obtain measurement results with an accuracy allowance of 0.01° when measuring the temperature difference between the temperature of the sensing chip and the temperature of the measuring chip with a temperature difference measurement circuit of the measuring chip.

The block diagrams and/or the schematic views of process flows of the methods, systems and computer program product in the specific embodiments of the present disclosure illustrate various aspects of the present disclosure, allowing persons skilled in the art to understand that all combinations of the calculation blocks and/or the steps of the calculation methods of the present disclosure can be implemented with computer program instructions. The computer program instructions are provided to general-purpose computers, special-purpose computers or processors of any other programmable data processing equipment to generate various instructions and perform operations/functions specified in the block diagrams and/or the schematic views of process flows.

The computer program instructions are stored in a computer-readable medium to give instructions to computers, other programmable data processing equipment or other apparatuses to operate in a specific way. Thus, the instructions stored in a computer-readable medium are indispensable to all operating subjects, including apparatuses performing the operations/functions specified in the block diagrams and/or the schematic views of process flows.

**Claims**

1.  A temperature measurement system (600, 700), comprising:

    at least one first PN junction element (621, 721) disposed at a first chip (602, 702) to sense a temperature (Ta) of the first chip (602, 702);
    at least one second PN junction element (622, 722) disposed at a second chip (604, 704) to sense a temperature (Tc) of the second chip (604, 704);
    a second temperature measurement circuit (620, 720) electrically connected to the first PN junction element (621, 721) and the second PN junction element (622, 722) and disposed at the second chip (604, 704) for measuring a temperature difference value (Ta-Tc) between the temperature (Ta) of the first chip (602, 702) and the temperature (Tc) of the second chip (604, 704);
    a third temperature measurement circuit (630, 730) comprising at least one third PN junction element (632, 732) and disposed at the second chip (604, 704) for measuring a temperature value (Tc) of the second chip (604, 704); and
    a processing unit (606, 740) for calculating the temperature difference value (Ta-Tc) and the temperature value (Tc) of the second chip (604, 704) to obtain a temperature value (Ta) of the first chip (602, 702).

2.  The temperature measurement system (600, 700) of claim 1, wherein the at least one first PN junction element (621, 721) is a pair of first PN junction elements having a first common node, and the at least one second PN junction element (622, 722) is a pair of second PN junction elements having a second common node, the first and second common nodes having a same reference potential.

3.  The temperature measurement system (600, 700) of claim 2, wherein the second temperature measurement circuit (620, 720) comprises at least one multiple current source circuit, the at least one multiple current source circuit provides multiple currents to flow through the pair of first PN junction elements so as to generate a plurality of first voltage signals associated with the pair of first PN junction elements, and provides multiple currents to flow through the pair of second PN junction elements so as to generate a plurality of second voltage signals associated with the pair of second PN junction elements.

4.  The temperature measurement system (600, 700) of claim 3, wherein the second temperature measurement circuit (620, 720) comprises a calculating unit for calculating to obtain the temperature difference value (Ta-Tc) according to a plurality of first voltage signals of the pair of first PN junction elements and a plurality of second voltage signals of the pair of second PN junction elements.

5.  The temperature measurement system (600, 700) of claim 3, wherein the second temperature measurement circuit

EP 4 372 336 B1

(620, 720) comprises a switching network for selectively switching the multiple current source circuit for providing multiple currents to flow through the pair of first PN junction elements and providing multiple currents to flow through the pair of second PN junction elements.

6. The temperature measurement system (600, 700) of claim 1, wherein the at least one first PN junction element (621, 721) is a diode or diode pair for sensing a temperature under test.

7. The temperature measurement system (700) of claim 6, further comprising a wireless communication module (750) electrically connected to the processing unit (740), the processing unit (740) calculating to obtain the temperature value (Ta) of the first chip (702) as the temperature under test, and controlling the wireless communication module (750) to transmit the temperature under test by wireless communication.

8. The temperature measurement system (600, 700) of claim 1, wherein the first chip (602, 702) is a sensing chip (602, 702) comprising at least one PN junction element (621, 721), wherein the second chip (604, 704) is a measuring chip (604, 704) comprising at least one PN junction element (622, 722), and wherein the second temperature measurement circuit (620, 720) electrically connected to the first PN junction element (621, 721) and to the second PN junction element (622, 722) is configured to measure a temperature difference value (Ta-Tc) between a temperature (Ta) of the sensing chip (602, 702) and a temperature (Tc) of the measuring chip (604, 704).

9. The temperature measurement system (600, 700) of claim 8, wherein the at least one first PN junction element (621, 721) is a diode or a diode pair having a common node.

10. The temperature measurement system (600, 700) of claim 8, wherein

the third temperature measurement circuit (630, 730) comprises the at least one third PN junction element (632 732) and is disposed at the measuring chip (604, 704) for measuring a temperature value (Tc) of the measuring chip (604, 704),
wherein the temperature difference value (Ta-Tc) and the temperature value (Tc) of the measuring chip (604, 704) are calculated to obtain a temperature value (Ta) of the sensing chip (602, 702).

11. The temperature measurement system (600, 700) of claim 10, wherein the at least one first PN junction element (621, 721) is a pair of first PN junction elements having a first common node, and the at least one second PN junction element (622, 722) is a pair of second PN junction elements having a second common node, the first and second common nodes have a same reference potential.

12. The temperature measurement system (600, 700) of claim 11, wherein the second temperature measurement circuit (620, 720) comprises at least one multiple current source circuit for providing multiple currents to flow through the pair of first PN junction elements to generate a plurality of first voltage signals associated with the pair of first PN junction elements, and providing multiple currents to flow through the pair of second PN junction elements to generate a plurality of second voltage signals associated with the pair of second PN junction elements.

13. The temperature measurement system (600, 700) of claim 12, wherein the at least one multiple current source circuit provides multiple currents having a current ratio of 1:n to flow through the pair of first PN junction elements respectively to generate a plurality of first voltage signals associated with the pair of first PN junction elements, and provides multiple currents having a current ratio of 1:n to flow through the pair of second PN junction elements respectively to generate a plurality of second voltage signals associated with the pair of second PN junction elements, wherein the pair of first PN junction elements has a junction area ratio of 1:1, and the pair of second PN junction elements has a junction area ratio of 1:1.

14. The temperature measurement system (600, 700) of claim 12, wherein the at least one multiple current source circuit provides equal currents I to flow through the pair of first PN junction elements respectively to generate a plurality of first voltage signals associated with the pair of first PN junction elements, and provides equal currents I to flow through the pair of second PN junction elements respectively to generate a plurality of second voltage signals associated with the pair of second PN junction elements, and the pair of first PN junction elements has a junction area ratio of 1:n, and the pair of second PN junction elements having a junction area ratio of 1:n.

15. The temperature measurement system (600, 700) of claim 12, wherein the second temperature measurement circuit (620, 720) comprises a switching network so that the at least one multiple current source circuit selectively switches to provide equal currents I to flow through the pair of first PN junction elements respectively, so as to generate a plurality of first voltage signals associated with the pair of first PN junction elements, and selectively switches to provide equal currents I to flow through the pair of second PN junction elements respectively, so as to generate a plurality of second voltage signals associated with the pair of second PN junction elements, the pair of first PN junction elements has a junction area ratio of 1:n, and the pair of second PN junction elements has a junction area ratio of 1:n.

16. The temperature measurement system (600, 700) of claim 12, wherein the second temperature measurement circuit (620, 720) comprises a calculating unit for calculating to obtain the temperature difference value (Ta-Tc) according to a plurality of first voltage signals of the pair of first PN junction elements and a plurality of second voltage signals of the pair of second PN junction elements.

17. The temperature measurement system (600, 700) of claim 10, wherein the processing unit (606, 740) is configured to calculate the temperature difference value (Ta-Tc) and the temperature value (Tc) of the measuring chip (604, 704) to obtain the temperature value (Ta) of the sensing chip (602, 702).

18. The temperature measurement system (700) of claim 17, further comprising a wireless communication module (750) electrically connected to the processing unit (740), the processing unit (740) configured to calculate and obtain the temperature value (Ta) of the sensing chip (702) and control the wireless communication module (750) to transmit the temperature value (Ta) by wireless communication.

19. A temperature measurement method, comprising the steps of:

providing at least one first PN junction element (621, 721) disposed at a first chip (602, 702) to sense a temperature (Ta) of the first chip (602, 702);
providing at least one second PN junction element (622, 722) disposed at a second chip (604, 704) to sense a temperature (Tc) of the second chip (604, 704);
measuring the first PN junction element and the second PN junction element to obtain a temperature difference value (Ta-Tc) between the temperature (Ta) of the first chip (602, 702) and the temperature (Tc) of the second chip (604, 704);
measuring a temperature value (Tc) of the second chip (604, 704); and
calculating the temperature difference value (Ta-Tc) and the temperature value (Tc) of the second chip (604, 704) to obtain a temperature value (Ta) of the first chip (602, 702).

20. The temperature measurement method of claim 19, wherein the at least one first PN junction element (621, 721) is a pair of first PN junction elements having a first common node, and the at least one second PN junction element (622, 722) is a pair of second PN junction elements having a second common node, the first and second common nodes have a same reference potential.

21. The temperature measurement method of claim 20, further comprising providing multiple currents to flow through the pair of first PN junction elements to generate a plurality of first voltage signals associated with the pair of first PN junction elements, and providing multiple currents to flow through the pair of second PN junction elements to generate a plurality of second voltage signals associated with the pair of second PN junction elements.

22. The temperature measurement method of claim 21, further comprising: calculating to obtain the temperature difference value (Ta-Tc) according to a plurality of the first voltage signals of the pair of first PN junction elements and a plurality of the second voltage signals of the pair of second PN junction elements.

23. The temperature measurement method of claim 21, further comprising: selectively switching, by a switching network, to provide multiple currents to flow through the pair of first PN junction elements, and selectively switching, by the switching network, to provide multiple currents to flow through the pair of second PN junction elements.

24. The temperature measurement method of claim 19, wherein the at least one first PN junction element (621, 721) is a diode or diode pair for sensing a temperature under test.

25. The temperature measurement method of claim 24, further comprising calculating to obtain the temperature value (Ta) of the first chip (702) as the temperature under test, and controlling a wireless communication module (750) to transmit the temperature under test by wireless communication.

26. The temperature measurement method of claim 19, further comprising the steps of:

reading (S401) a temperature difference value (Ta-Tc) stored in a memory wherein the temperature difference value (Ta-Tc) is a difference between a temperature (Ta) of a sensing chip (602, 702) and a temperature (Tc) of a measuring chip (604, 704);
reading (S402) a temperature value (Tc) stored in the memory, wherein the temperature value (Tc) is the temperature of the measuring chip (604, 704); and
calculating (S403) the temperature difference value (Ta-Tc) and the temperature value (Tc) to obtain a temperature value of the sensing chip (602, 702).

**Patentansprüche**

1. Temperaturmesssystem (600, 700), das Folgendes umfasst:

mindestens ein erstes PN-Übergangselement (621, 721), das an einem ersten Chip (602, 702) angeordnet ist, um eine Temperatur (Ta) des ersten Chips (602, 702) zu erfassen;
mindestens ein zweites PN-Übergangselement (622, 722), das an einem zweiten Chip (604, 704) angeordnet ist, um eine Temperatur (Tc) des zweiten Chips (604, 704) zu erfassen;
eine zweite Temperaturmessschaltung (620, 720), die elektrisch mit dem ersten PN-Übergangselement (621, 721) und dem zweiten PN-Übergangselement (622, 722) verbunden und an dem zweiten Chip (604, 704) angeordnet ist, um einen Temperaturdifferenzwert (Ta-Tc) zwischen der Temperatur (Ta) des ersten Chips (602, 702) und der Temperatur (Tc) des zweiten Chips (604, 704) zu messen;
eine dritte Temperaturmessschaltung (630, 730), die mindestens ein drittes PN-Übergangselement (632, 732) umfasst und an dem zweiten Chip (604, 704) angeordnet ist, um einen Temperaturwert (Tc) des zweiten Chips (604, 704) zu messen; und
eine Verarbeitungseinheit (606, 740) zum Berechnen des Temperaturdifferenzwertes (Ta-Tc) und des Temperaturwertes (Tc) des zweiten Chips (604, 704), um einen Temperaturwert (Ta) des ersten Chips (602, 702) zu erhalten.

2. Temperaturmesssystem (600, 700) nach Anspruch 1, wobei das mindestens eine erste PN-Übergangselement (621, 721) ein Paar erster PN-Übergangselemente mit einem ersten gemeinsamen Knoten ist und das mindestens eine zweite PN-Übergangselement (622, 722) ein Paar zweiter PN-Übergangselemente mit einem zweiten gemeinsamen Knoten ist, wobei der erste und der zweite gemeinsame Knoten das gleiche Bezugspotential haben.

3. Temperaturmesssystem (600, 700) nach Anspruch 2, wobei die zweite Temperaturmessschaltung (620, 720) mindestens eine Mehrfachstromquellenschaltung umfasst, wobei die mindestens eine Mehrfachstromquellenschaltung dafür sorgt, dass mehrere Ströme durch das Paar von ersten PN-Übergangselementen fließen, um eine Vielzahl von ersten Spannungssignalen zu erzeugen, die dem Paar von ersten PN-Übergangselementen zugeordnet sind, und dafür sorgt, dass mehrere Ströme durch das Paar von zweiten PN-Übergangselementen fließen, um eine Vielzahl von zweiten Spannungssignalen zu erzeugen, die dem Paar von zweiten PN-Übergangselementen zugeordnet sind.

4. Temperaturmesssystem (600, 700) nach Anspruch 3, wobei die zweite Temperaturmessschaltung (620, 720) eine Recheneinheit zum Berechnen umfasst, um den Temperaturdifferenzwert (Ta-Tc) gemäß einer Mehrzahl von ersten Spannungssignalen des Paares von ersten PN-Übergangselementen und einer Mehrzahl von zweiten Spannungssignalen des Paares von zweiten PN-Übergangselementen zu erhalten.

5. Temperaturmesssystem (600, 700) nach Anspruch 3, wobei die zweite Temperaturmessschaltung (620, 720) ein Schaltnetzwerk zum selektiven Schalten der Mehrfachstromquellenschaltung umfasst, um mehrere Ströme zum Fließen durch das Paar erster PN-Übergangselemente bereitzustellen und mehrere Ströme zum Fließen durch das Paar zweiter PN-Übergangselemente bereitzustellen.

6. Temperaturmesssystem (600, 700) nach Anspruch 1, wobei das mindestens eine erste PN-Übergangselement (621, 721) eine Diode oder ein Diodenpaar zum Erfassen einer zu prüfenden Temperatur ist.

7. Temperaturmesssystem (700) nach Anspruch 6, das ferner ein drahtloses Kommunikationsmodul (750) umfasst, das elektrisch mit der Verarbeitungseinheit (740) verbunden ist, wobei die Verarbeitungseinheit (740) den Temperaturwert (Ta) des ersten Chips (702) berechnet um die zu prüfende Temperatur zu erhalten, und das drahtlose Kommunikationsmodul (750) steuert, um die zu prüfende Temperatur durch drahtlose Kommunikation zu übertragen.

8. Temperaturmesssystem (600, 700) nach Anspruch 1, wobei der erste Chip (602, 702) ein Sensorchip (602, 702) ist, der mindestens ein PN-Übergangselement (621, 721) umfasst, wobei der zweite Chip (604, 704) ein Messchip (604, 704) ist, der mindestens ein PN-Übergangselement (622, 722) umfasst, und wobei die zweite Messschaltung (620, 720), die elektrisch mit dem ersten PN-Übergangselement (621, 721) und dem zweiten PN-Übergangselement (622, 722) verbunden ist, so konfiguriert ist, dass sie einen Temperaturdifferenzwert (Ta-Tc) zwischen einer Temperatur (Ta) des Sensorchips (602, 702) und einer Temperatur (Tc) des Messchips (604, 704) misst.

9. Temperaturmesssystem (600, 700) nach Anspruch 8, wobei das mindestens eine erste PN-Übergangselement (621, 721) eine Diode oder ein Diodenpaar mit einem gemeinsamen Knoten ist.

10. Temperaturmesssystem (600, 700) nach Anspruch 8, wobei

die dritte Temperaturmessschaltung (630, 730) das mindestens eine dritte PN-Übergangselement (632, 732) umfasst und an dem Messchip (604, 704) zur Messung eines Temperaturwertes (Tc) des Messchips (604, 704) angeordnet ist,
wobei der Temperaturdifferenzwert (Ta-Tc) und der Temperaturwert (Tc) des Messchips (604, 704) berechnet werden, um einen Temperaturwert (Ta) des Sensorchips (602, 702) zu erhalten.

11. Temperaturmesssystem (600, 700) nach Anspruch 10, wobei das mindestens eine erste PN-Übergangselement (621, 721) ein Paar erster PN-Übergangselemente mit einem ersten gemeinsamen Knoten ist und das mindestens eine zweite PN-Übergangselement (622, 722) ein Paar zweiter PN-Übergangselemente mit einem zweiten gemeinsamen Knoten ist, wobei der erste und der zweite gemeinsame Knoten ein gleiches Bezugspotential haben.

12. Temperaturmesssystem (600, 700) nach Anspruch 11, wobei die zweite Temperaturmessschaltung (620, 720) mindestens eine Mehrfachstromquellenschaltung umfasst, um mehrere Ströme bereitzustellen, die durch das Paar der ersten PN-Übergangselemente fließen, um mehrere erste Spannungssignale zu erzeugen, die dem Paar der ersten PN-Übergangselemente zugeordnet sind, und um mehrere Ströme bereitzustellen, die durch das Paar der zweiten PN-Übergangselemente fließen, um mehrere zweite Spannungssignale zu erzeugen, die dem Paar der zweiten PN-Übergangselemente zugeordnet sind.

13. Temperaturmesssystem (600, 700) nach Anspruch 12, wobei die mindestens eine Mehrfachstromquellenschaltung mehrere Ströme mit einem Stromverhältnis von 1:n bereitstellt, die jeweils durch das Paar erster PN-Übergangselemente fließen, um mehrere erste Spannungssignale zu erzeugen, die dem Paar erster PN-Übergangselemente zugeordnet sind, und mehrere Ströme mit einem Stromverhältnis von 1:n, um durch das Paar der zweiten PN-Übergangselemente zu fließen, um eine Vielzahl von zweiten Spannungssignalen zu erzeugen, die dem Paar der zweiten PN-Übergangselemente zugeordnet sind, wobei das Paar der ersten PN-Übergangselemente ein Übergangsbereichsverhältnis von 1:1 hat und das Paar der zweiten PN-Übergangselemente ein Übergangsbereichsverhältnis von 1:1 hat.

14. Temperaturmesssystem (600, 700) nach Anspruch 12, wobei die mindestens eine Mehrfachstromquellenschaltung dafür sorgt, dass jeweils gleiche Ströme I durch das Paar erster PN-Übergangselemente fließen, um eine Vielzahl erster Spannungssignale zu erzeugen, die dem Paar erster PN-Übergangselemente zugeordnet sind, und dafür sorgt, dass jeweils gleiche Ströme I durch das Paar zweiter PN-Übergangselemente fließen, um eine Vielzahl zweiter Spannungssignale zu erzeugen, die dem Paar zweiter PN-Übergangselemente zugeordnet sind, und das Paar erster PN-Übergangselemente ein Übergangsbereichsverhältnis von 1:n, und das Paar der zweiten PN-Übergangselemente ein Verhältnis der Übergangsbereiche von 1:n aufweist.

15. Temperaturmesssystem (600, 700) nach Anspruch 12, wobei die zweite Temperaturmessschaltung (620, 720) ein Schaltnetzwerk umfasst, so dass die mindestens eine Mehrfachstromquellenschaltung selektiv schaltet, um gleiche Ströme I bereitzustellen, die jeweils durch das Paar erster PN-Übergangselemente fließen, schaltet, um eine Vielzahl von ersten Spannungssignalen zu erzeugen, die dem Paar der ersten PN-Übergangselemente zugeordnet sind, und selektiv schaltet, um gleiche Ströme I bereitzustellen, die durch das Paar der zweiten PN-Übergangselemente fließen, um eine Vielzahl von zweiten Spannungssignalen zu erzeugen, die dem Paar der zweiten PN-Übergangselemente zugeordnet sind, wobei das Paar der ersten PN-Übergangselemente ein Übergangsbereichsverhältnis von 1:n, und das Paar der zweiten PN-Übergangselemente hat ein Verhältnis der Übergangsbereiche von 1:n.

16. Temperaturmesssystem (600, 700) nach Anspruch 12, wobei die zweite Temperaturmessschaltung (620, 720) eine Recheneinheit zum Berechnen umfasst, um den Temperaturdifferenzwert (Ta-Tc) gemäß einer Mehrzahl von ersten Spannungssignalen des Paares von ersten PN-Übergangselementen und einer Mehrzahl von zweiten Spannungssignalen des Paares von zweiten PN-Übergangselementen zu erhalten.

17. Temperaturmesssystem (600, 700) nach Anspruch 10, wobei die Verarbeitungseinheit (606, 740) so konfiguriert ist, dass sie den Differenzwert (Ta-Tc) und den Temperaturwert (Tc) des Messchips (604, 704) berechnet, um den Temperaturwert (Ta) des Sensorchips (602, 702) zu erhalten.

18. Temperaturmesssystem (700) nach Anspruch 17, das ferner ein drahtloses Kommunikationsmodul (750) umfasst, das elektrisch mit der Verarbeitungseinheit (740) verbunden ist, wobei die Verarbeitungseinheit (740) so konfiguriert ist, dass sie den Temperaturwert (Ta) des Sensorchips (702) berechnet und erhält und das drahtlose Kommunikationsmodul (750) steuert, um den Temperaturwert (Ta) durch drahtlose Kommunikation zu übertragen.

19. Verfahren zur Temperaturmessung, das die folgenden Schritte umfasst:

Bereitstellen mindestens eines ersten PN-Übergangselements (621, 721), das an einem ersten Chip (602, 702) angeordnet ist, um eine Temperatur (Ta) des ersten Chips (602, 702) zu erfassen;
Bereitstellen mindestens eines zweiten PN-Übergangselements (622, 722), das an einem zweiten Chip (604, 704) angeordnet ist, um eine Temperatur (Tc) des zweiten Chips (604, 704) zu erfassen;
Messen des ersten PN-Übergangselements und des zweiten PN-Übergangselements, um einen Temperaturdifferenzwert (Ta-Tc) zwischen der Temperatur (Ta) des ersten Chips (602, 702) und der Temperatur (Tc) des zweiten Chips (604, 704) zu erhalten;
Messen eines Temperaturwertes (Tc) des zweiten Chips (604, 704); und
Berechnen des Temperaturdifferenzwertes (Ta-Tc) und des Temperaturwertes (Tc) des zweiten Chips (604, 704), um einen Temperaturwert (Ta) des ersten Chips (602, 702) zu erhalten.

20. Temperaturmessverfahren nach Anspruch 19, wobei das mindestens eine erste PN-Übergangselement (621, 721) ein Paar erster PN-Übergangselemente mit einem ersten gemeinsamen Knoten ist und das mindestens eine zweite PN-Übergangselement (622, 722) ein Paar zweiter PN-Übergangselemente mit einem zweiten gemeinsamen Knoten ist, wobei der erste und der zweite gemeinsame Knoten ein gleiches Bezugspotential haben.

21. Temperaturmessverfahren nach Anspruch 20 umfassend ferner das Bereitstellen mehrerer Ströme, die durch das Paar erster PN-Übergangselemente fließen, um eine Vielzahl erster Spannungssignale zu erzeugen, die dem Paar erster PN-Übergangselemente zugeordnet sind, und das Bereitstellen mehrerer Ströme, die durch das Paar zweiter PN-Übergangselemente fließen, um eine Vielzahl zweiter Spannungssignale zu erzeugen, die dem Paar zweiter PN-Übergangselemente zugeordnet sind.

22. Temperaturmessverfahren nach Anspruch 21, ferner umfassend: Berechnen des Temperaturdifferenzwertes (Ta-Tc) gemäß einer Vielzahl der ersten Spannungssignale des Paares erster PN-Übergangselemente und einer Vielzahl der zweiten Spannungssignale des Paares zweiter PN-Übergangselemente.

23. Temperaturmessverfahren nach Anspruch 21, ferner umfassend: selektives Schalten durch ein Schaltnetzwerk, um mehrere Ströme zum Fließen durch das Paar von ersten PN-Übergangselementen bereitzustellen, und selektives Schalten durch das Schaltnetzwerk, um mehrere Ströme zum Fließen durch das Paar von zweiten PN-Übergangselementen bereitzustellen.

24. Temperaturmessverfahren nach Anspruch 19, wobei das mindestens eine erste PN-Übergangselement (621, 721) eine Diode oder ein Diodenpaar zum Erfassen einer zu prüfenden Temperatur ist.

25. Temperaturmessverfahren nach Anspruch 24, ferner umfassend die Berechnung, um den Temperaturwert (Ta) des ersten Chips als die zu prüfende Temperatur zu erhalten, und die Steuerung eines drahtlosen Kommunikationsmoduls (750), um die zu prüfende Temperatur durch drahtlose Kommunikation zu übertragen.

26. Temperaturmessverfahren nach Anspruch 19 umfassend ferner die folgenden Schritte:

Lesen (S401) eines Temperaturdifferenzwertes (Ta-Tc), der in einem Speicher gespeichert ist, wobei der Temperaturdifferenzwert (Ta-Tc) eine Differenz zwischen einer Temperatur (Ta) eines Sensorchips (602, 702) und einer Temperatur (Tc) eines Messchips (604, 704) ist;

Lesen (S402) eines im Speicher gespeicherten Temperaturwertes (Tc), wobei der Temperaturwert (Tc) die Temperatur des Messchips (604, 704) ist; und

Berechnen (S403) des Temperaturdifferenzwertes (Ta-Tc) und des Temperaturwertes (Tc), um einen Temperaturwert des Sensorchips (602, 702) zu erhalten.

## Revendications

1. Système de mesure de température (600, 700), comprenant :

au moins un premier élément de jonction PN (621, 721) disposé au niveau d'une première puce (602, 702) pour détecter une température (Ta) de la première puce (602, 702) ;

au moins un deuxième élément de jonction PN (622, 722) disposé au niveau d'une deuxième puce (604, 704) pour détecter une température (Tc) de la deuxième puce (604, 704) ;

un deuxième circuit de mesure de température (620, 720) connecté électriquement au premier élément de jonction PN (621, 721) et au deuxième élément de jonction PN (622, 722) et disposé au niveau de la deuxième puce (604, 704) pour mesurer une valeur de différence de température (Ta-Tc) entre la température (Ta) de la première puce (602, 702) et la température (Tc) de la deuxième puce (604, 704) ;

un troisième circuit de mesure de température (630, 730) comprenant au moins un troisième élément de jonction PN (632, 732) et disposé au niveau de la deuxième puce (604, 704) pour mesurer une valeur de température (Tc) de la deuxième puce (604, 704) ;

et

une unité de traitement (606, 740) pour calculer la valeur de différence de température (Ta-Tc) et la valeur de température (Tc) de la deuxième puce (604, 704) pour obtenir une valeur de température (Ta) de la première puce (602, 702).

2. Système de mesure de température (600, 700) selon la revendication 1, dans lequel l'au moins un premier élément de jonction PN (621, 721) est une paire de premiers éléments de jonction PN présentant un premier nœud commun, et l'au moins un deuxième élément de jonction PN (622, 722) est une paire de deuxièmes éléments de jonction PN présentant un deuxième nœud commun, les premier et deuxième nœuds communs présentant un même potentiel de référence.

3. Système de mesure de température (600, 700) selon la revendication 2, dans lequel le deuxième circuit de mesure de température (620, 720) comprend au moins un circuit à multiples sources de courant, l'au moins un circuit à multiples sources de courant fournit de multiples courants destinés à circuler à travers la paire de premiers éléments de jonction PN de manière à générer une pluralité de premiers signaux de tension associés à la paire de premiers éléments de jonction PN, et fournit de multiples courants destinés à circuler à travers la paire de deuxièmes éléments de jonction PN de manière à générer une pluralité de deuxièmes signaux de tension associés à la paire de deuxièmes éléments de jonction PN.

4. Système de mesure de température (600, 700) selon la revendication 3, dans lequel le deuxième circuit de mesure de température (620, 720) comprend une unité de calcul pour effectuer un calcul pour obtenir la valeur de différence de température (Ta-Tc) en fonction d'une pluralité de premiers signaux de tension de la paire de premiers éléments de jonction PN et d'une pluralité de deuxièmes signaux de tension de la paire de deuxièmes éléments de jonction PN.

5. Système de mesure de température (600, 700) selon la revendication 3, dans lequel le deuxième circuit de mesure de température (620, 720) comprend un réseau de commutation pour effectuer une commutation sélective du circuit à multiples sources de courant pour fournir de multiples courants destinés à circuler à travers la paire de premiers éléments de jonction PN et fournir de multiples courants destinés à circuler à travers la paire de deuxièmes éléments de jonction PN.

6. Système de mesure de température (600, 700) selon la revendication 1, dans lequel l'au moins un premier élément de jonction PN (621, 721) est une diode ou paire de diodes pour détecter une température sous test.

7. Système de mesure de température (700) selon la revendication 6, comprenant en outre un module de communication sans fil (750) connecté électriquement à l'unité de traitement (740), l'unité de traitement (740) effectuant un calcul pour obtenir la valeur de température (Ta) de la première puce (702) en tant que température sous test, et commandant le module de communication sans fil (750) pour transmettre la température sous test par communication sans fil.

8. Système de mesure de température (600, 700) selon la revendication 1, dans lequel la première puce (602, 702) est une puce de détection (602, 702) comprenant au moins un élément de jonction PN (621, 721), dans lequel la deuxième puce (604, 704) est une puce de mesure (604, 704) comprenant au moins un élément de jonction PN (622, 722), et dans lequel le deuxième circuit de mesure de température (620, 720) connecté électriquement au premier élément de jonction PN (621, 721) et au deuxième élément de jonction (622, 722) est configuré pour mesurer une valeur de différence de température (Ta-Tc) entre une température (Ta) de la puce de détection (602, 702) et une température (Tc) de la puce de mesure (604, 704).

9. Système de mesure de température (600, 700) selon la revendication 8, dans lequel l'au moins un premier élément de jonction PN (621, 721) est une diode ou une paire de diodes présentant un nœud commun.

10. Système de mesure de température (600, 700) selon la revendication 8, dans lequel le troisième circuit de mesure de température (630, 730) comprend l'au moins un troisième élément de jonction PN (632 732) et est disposé au niveau de la puce de mesure (604, 704) pour mesurer une valeur de température (Tc) de la puce de mesure (604, 704), dans lequel la valeur de différence de température (Ta-Tc) et la valeur de température (Tc) de la puce de mesure (604, 704) sont calculées pour obtenir une valeur de température (Ta) de la puce de détection (602, 702) .

11. Système de mesure de température (600, 700) selon la revendication 10, dans lequel l'au moins un premier élément de jonction PN (621, 721) est une paire de premiers éléments de jonction PN présentant un premier nœud commun, et l'au moins un deuxième élément de jonction PN (622, 722) est une paire de deuxièmes éléments de jonction PN présentant un deuxième nœud commun, les premier et deuxième nœuds communs présentent un même potentiel de référence.

12. Système de mesure de température (600, 700) selon la revendication 11, dans lequel le deuxième circuit de mesure de température (620, 720) comprend au moins un circuit à multiples sources de courant pour fournir de multiples courants destinés à circuler à travers la paire de premiers éléments de jonction PN pour générer une pluralité de premiers signaux de tension associés à la paire de premiers éléments de jonction PN, et fournir de multiples courants destinés à circuler à travers la paire de deuxièmes éléments de jonction PN pour générer une pluralité de deuxièmes signaux de tension associés à la paire de deuxièmes éléments de jonction PN.

13. Système de mesure de température (600, 700) selon la revendication 12, dans lequel l'au moins un circuit à multiples sources de courant fournit de multiples courants présentant un rapport des courants de 1:n destinés à circuler à travers la paire de premiers éléments de jonction PN respectivement pour générer une pluralité de premiers signaux de tension associés à la paire de premiers éléments de jonction PN, et fournit de multiples courants présentant un rapport des courants de 1:n destinés à circuler à travers la paire de deuxièmes éléments de jonction PN respectivement pour générer une pluralité de deuxièmes signaux de tension associés à la paire de deuxièmes éléments de jonction PN, dans lequel la paire de premiers éléments de jonction PN présente un rapport de zone de jonction de 1:1, et la paire de deuxièmes éléments de jonction PN présente un rapport de zone de jonction de 1:1.

14. Système de mesure de température (600, 700) selon la revendication 12, dans lequel l'au moins un circuit à multiples sources de courant fournit des courants égaux I destinés à circuler à travers la paire de premiers éléments de jonction PN respectivement pour générer une pluralité de premiers signaux de tension associés à la paire de premiers éléments de jonction PN, et fournit des courants égaux I destinés à circuler à travers la paire de deuxièmes éléments de jonction PN respectivement pour générer une pluralité de deuxièmes signaux de tension associés à la paire de deuxièmes éléments de jonction PN, et la paire de premiers éléments de jonction PN présente un rapport de zone de jonction de 1:n, et la paire de deuxièmes éléments de jonction PN présentent un rapport de zone de jonction de 1:n.

15. Système de mesure de température (600, 700) selon la revendication 12, dans lequel le deuxième circuit de mesure de température (620, 720) comprend un réseau de commutation de sorte que l'au moins un circuit à multiples sources de courant effectue une commutation sélective pour fournir des courants égaux I destinés à circuler à travers la paire de premiers éléments de jonction PN respectivement, de manière à générer une pluralité de premiers signaux de tension associés à la paire de premiers éléments de jonction PN, et effectue une commutation sélective pour fournir des courants égaux I destinés à circuler à travers la paire de deuxièmes éléments de jonction PN respectivement, de manière à générer une pluralité de deuxièmes signaux de tension associés à la paire de deuxièmes éléments de jonction PN, la paire de premiers éléments de jonction PN présente un rapport de zone de jonction de 1:n, et la paire de deuxièmes éléments de jonction PN présente un rapport de zone de jonction de 1:n.

16. Système de mesure de température (600, 700) selon la revendication 12, dans lequel le deuxième circuit de mesure de température (620, 720) comprend une unité de calcul pour effectuer un calcul pour obtenir la valeur de différence de température (Ta-Tc) en fonction d'une pluralité de premiers signaux de tension de la paire de premiers éléments de jonction PN et d'une pluralité de deuxièmes signaux de tension de la paire de deuxièmes éléments de jonction PN.

17. Système de mesure de température (600, 700) selon la revendication 10, dans lequel l'unité de traitement (606, 740) est configurée pour calculer la valeur de différence de température (Ta-Tc) et la valeur de température (Tc) de la puce de mesure (604, 704) pour obtenir la valeur de température (Ta) de la puce de détection (602, 702).

18. Système de mesure de température (700) selon la revendication 17, comprenant en outre un module de communication sans fil (750) connecté électriquement à l'unité de traitement (740), l'unité de traitement (740) étant configurée pour calculer et obtenir la valeur de température (Ta) de la puce de détection (702) et commander le module de communication sans fil (750) pour transmettre la valeur de température (Ta) par communication sans fil.

19. Procédé de mesure de température, comprenant les étapes de :

fourniture d'au moins un premier élément de jonction PN (621, 721) disposé au niveau d'une première puce (602, 702) pour détecter une température (Ta) de la première puce (602, 702) ;
fourniture d'au moins un deuxième élément de jonction PN (622, 722) disposé au niveau d'une deuxième puce (604, 704) pour détecter une température (Tc) de la deuxième puce (604, 704) ;
mesure du premier élément de jonction PN et du deuxième élément de jonction PN pour obtenir une valeur de différence de température I (Ta-Tc) entre la température (Ta) de la première puce (602, 702) et la température (Tc) de la deuxième puce (604, 704) ;
mesure d'une valeur de température (Tc) de la deuxième puce (604, 704) ; et
calcul de la valeur de différence de température (Ta-Tc) et de la valeur de température (Tc) de la deuxième puce (604, 704) pour obtenir une valeur de température (Ta) de la première puce (602, 702).

20. Procédé de mesure de température selon la revendication 19, dans lequel l'au moins un premier élément de jonction PN (621, 721) est une paire de premiers éléments de jonction PN présentant un premier nœud commun, et l'au moins un deuxième élément de jonction PN (622, 722) est une paire de deuxièmes éléments de jonction PN présentant un deuxième nœud commun, les premier et deuxième nœuds communs présentent un même potentiel de référence.

21. Procédé de mesure de température selon la revendication 20, comprenant en outre la fourniture de multiples courants destinés à circuler à travers la paire de premiers éléments de jonction PN pour générer une pluralité de premiers signaux de tension associés à la paire de premiers éléments de jonction PN, et la fourniture de multiples courants destinés à circuler à travers la paire de deuxièmes éléments de jonction PN pour générer une pluralité de deuxièmes signaux de tension associés à la paire de deuxièmes éléments de jonction PN.

22. Procédé de mesure de température selon la revendication 21, comprenant en outre :
un calcul pour obtenir la valeur de différence de température (Ta-Tc) en fonction d'une pluralité des premiers signaux de tension de la paire de premiers éléments de jonction PN et d'une pluralité des deuxièmes signaux de tension de la paire de deuxièmes éléments de jonction PN.

23. Procédé de mesure de température selon la revendication 21, comprenant en outre :
une commutation sélective, par un réseau de commutation, pour fournir de multiples courants destinés à circuler à travers la paire de premiers éléments de jonction PN, et une commutation sélective, par le réseau de commutation, pour fournir de multiples courants destinés à circuler à travers la paire de deuxièmes éléments de jonction PN.

24. Procédé de mesure de température selon la revendication 19, dans lequel l'au moins un premier élément de jonction PN (621, 721) est une diode ou paire de diodes pour détecter une température sous test.

25. Procédé de mesure de température selon la revendication 24, comprenant en outre un calcul pour obtenir la valeur de température (Ta) de la première puce (702) en tant que température sous test, et la commande d'un module de communication sans fil (750) pour transmettre la température sous test par communication sans fil.

26. Procédé de mesure de température selon la revendication 19, comprenant en outre les étapes de :

lecture (S401) d'une valeur de différence de température (Ta-Tc) stockée dans une mémoire, dans lequel la valeur de différence de température (Ta-Tc) est une différence entre une température (Ta) d'une puce de détection (602, 702) et une température (Tc) d'une puce de mesure (604, 704) ;

lecture (S402) d'une valeur de température (Tc) stockée dans la mémoire, dans lequel la valeur de température (Tc) est la température de la puce de mesure (604, 704) ; et

calcul (S403) de la valeur de différence de température (Ta-Tc) et de la valeur de température (Tc) pour obtenir une valeur de température de la puce de détection (602, 702).

100

112

Thermopile
device

Thermistor

114

122

Target
temperature
measurement

Temperature
measurement
circuit

CPU

120

126

124

## FIG.1A

Temperature (°C)

Ambient
temperature 0°C

Ambient
temperature
25°C

Ambient
temperature 37°C

100

80

60

40

20

0

-2      -1      0      1      2      3      4      5      6      7

Voltage (mV)

## FIG.1B

100

110 112 122 120

126

Thermopile
device

Target temperature
measurement
circuit

CPU

Temperature
measurement
circuit

116 124

FIG.2A

$\Delta V_{BE}$@323°K=50°C

$\Delta V_{BE}$@283°K=10°C

$\Delta V_{BE}$

0°K T 400°K

FIG.2B

FIG.3

FIG.4

FIG.5

FIG.6

**FIG.7**

Enable the heater to receive electrical energy so as to heat a semiconductor substrate of a sensing chip, and measure the temperature Tb of the semiconductor substrate by a diode pair, and make the temperature Tb approach a predetermined value

When the semiconductor substrate is at the temperature of the predetermined value, enable the silicon transducer (thermopile) to operate

**FIG.8**

S200

S201

When the heater does not receive electric energy, measure a target temperature Ta1 and a temperature Tb1 of the sensor chip by the silicon transducer (thermopile device) and the diode pair of the sensor chip, respectively

S202

If Ta1>Tb1, the heater is enabled to receive the electric energy to heat the temperature of the sensor chip to a temperature approaching Ta1

S203

Measure the target temperature Ta2 and the temperature Tb2 of the heated sensing chip by the thermopile and the diode pair again, respectively, so as to improve the accuracy of the target temperature

## FIG.9

Sample

| Power | EnHT | HT<3:0> | I_Vbat5 (mA) | $V_{DIODE}$ (V) | Estimated temperature |
|-------|------|---------|--------------|-----------------|----------------------|
| 3.7 V | 0 | 0000 | 0 | 0.6174 | 21.7 |
| | 1 | 0000 | ~1.32 | 0.6168 | 22.0 |
| | 1 | 0011 | ~65 | 0.5594 | 51.5 |
| | 1 | 0110 | ~109 | 0.5151 | 73.6 |
| | 1 | 1001 | ~160 | 0.4772 | 92.2 |

## FIG.10

Sample

| Power | EnHT | HT<3:0> | I_Vbat5 (mA) | $V_{DIODE}$ (V) | Estimated temperature |
|-------|------|---------|--------------|------------------|------------------------|
| 3.7 V | 0 | 0000 | 0 | 0.6163 | 22.3 |
|  | 1 | 0000 | ~1.33 | 0.6140 | 23.5 |
|  | 1 | 0011 | ~65 | 0.5595 | 51.5 |
|  | 1 | 0110 | ~109 | 0.5169 | 72.7 |
|  | 1 | 1001 | ~160 | 0.4798 | 91.0 |

EnHT: Enable Heater     HT<3:0>: 4-bit current value

## FIG.11

## FIG.12A

## FIG.12B

FIG.12C

FIG.12D

FIG.13

FIG.14A

FIG.14B

FIG.15

FIG.16A

FIG.16B

FIG.16C

FIG.17A

FIG.17B

FIG.18

FIG.19

FIG.20

FIG.21

502    504                    510                                    500

511

        First temperature
        measurement
        circuit

521                                                                 506

        520
                            Second
                            temperature          Microprocessor
                            measurement
        522                 circuit

                            Third temperature
                            measurement
        532                 circuit

                            530

# FIG.22

S300

The microprocessor reads a first
difference value stored in a memory        S301

The microprocessor reads a
second difference value stored in          S302
the memory

The microprocessor reads a
temperature value stored in the            S303
memory

The microprocessor calculates a            S304
sum of the first difference value, the
second difference value and the
temperature value to obtain a target
temperature value of the object
under test

# FIG.23

FIG.24

FIG.25

FIG.26

The microprocessor reads a second difference value stored in the memory — S401

The microprocessor reads a temperature value stored in the memory — S402

The microprocessor calculates a sum of the second difference value and the temperature value to obtain a target temperature value — S403

FIG.27

**REFERENCES CITED IN THE DESCRIPTION**

**Patent documents cited in the description**

- US 6565254 B2
- US 2021364359 A1
- DE 10341142 A1
- US 6890097 B2
- US 2009207882 A1
- US 8061894 B2